# EUROPÄISCHE PATENTSCHRIFT

(11) **EP 1 159 552 B1**
(45) Veröffentlichungstag und Bekanntmachung des Hinweises auf die Patenterteilung: **02.10.2002**
(21) Anmeldenummer: 00916919.4
(22) Anmeldetag: 10.03.2000
(51) Int. Cl.: F16H 61/14, F16D 33/10

(54) **ANFAHREINHEIT**
STARTING UNIT
UNITE DE DEMARRAGE

(30) Priorität: 12.03.1999 DE 29904558 U; 15.03.1999 DE 19911361
(43) Veröffentlichungstag der Anmeldung: 05.12.2001
(73) Patentinhaber: Voith Turbo GmbH & Co. KG, 89522 Heidenheim (DE)
(72) Erfinder: KLEMENT, Werner, D-89520 Heidenheim (DE); VOGELSANG, Klaus, D-74564 Crailsheim (DE); EDELMANN, Peter, D-89522 Heidenheim (DE); HÖLLER, Heinz, D-74564 Crailsheim (DE); FRIEDRICH, Jürgen, D-74564 Crailsheim (DE); KERNCHEN, Reinhard, D-74598 Satteldorf (DE)
(74) Vertreter: Dr. Weitzel & Partner
(86) Internationale Anmeldenummer: EP0002112
(87) Internationale Veröffentlichungsnummer: WO00055527

(56) Entgegenhaltungen:
- DE-A- 19 650 339
- DE-C- 712 767
- US-A- 2 965 202
- US-A- 3 818 782

## Beschreibung

Die Erfindung betrifft eine Anfahreinheit für den Einsatz in Schaltgetrieben, insbesondere automatisierten Schaltgetrieben in Antriebssystemen, insbesondere für den Einsatz in Fahrzeugen, im einzelnen mit den Merkmalen aus dem Oberbegriff des Anspruchs 1; ferner ein automatisiertes Schaltgetriebe.

Getriebe für den Einsatz in Nutzkraftwagen, insbesondere in Form von Schaltgetrieben oder automatisierten Schaltgetrieben sind in einer Vielzahl von Ausführungen bekannt. Diesen gemeinsam ist, daß der Anfahrvorgang über ein Kupplungselement - bei automatisierten Schaltgetrieben in der Regel eine Reibkupplung oder bei automatischen Getrieben ein hydrodynamischer Wandler - realisiert wird. Problematisch gestaltet sich die Verwendung einer Reibkupplung als Anfahrelement jedoch in Funktionszuständen, welche durch einen erhöhten Schlupf über eine längere Zeitdauer gekennzeichnet sind. Aufgrund der thermischen Beanspruchung ist die Kupplungseinheit dann einem erhöhten Verschleiß unterworfen. Dies bedingt geringere Standzeiten für das Anfahrelement. Der Nachteil von Lösungen mit hydrodynamischem Wandler besteht im wesentlichen in den hohen Kosten für den hydrodynamischen Teil, dem Erfordernis des Vorsehens einer Trennkupplung sowie der erforderlichen Überdimensionierung des mechanischen Getriebeteiles.

Eine gattungsgegemäße Ausführung einer Getriebebaueinheit mit einem Anfahrelement in Form einer Turbokupplung ist aus der Druckschrift DE 196 50 339 A1 bekannt. Mit dieser werden mindestens zwei Betriebszustände - ein erster Betriebszustand zur Leistungsübertragung in wenigstens zwei Gangschaltstufen und ein zweiter Betriebszustand zur Abbremsung - realisiert. Dabei werden beide Funktionen über die Turbokupplung realisiert. Diese umfasst ein Pumpenrad und ein Turbinenrad, die miteinander einen torusförmigen Arbeitsraum bilden.

Die Realisierung der Funktion eines hydrodynamischen Retarders erfolgt durch Zuordnung der Funktion des Statorschaufelrades, entweder durch Festsetzung gegenüber den ruhenden Getriebeteilen zum Pumpenrad und der Funktion des Rotorschaufelrades zum Turbinenrad oder der Zuordnung der Funktion des Statorschaufelrades zum Turbinenschaufelrad durch Festsetzen des Schaufelrades gegenüber den ruhenden Getriebeteilen und der Funktion des Rotorschaufelrades zum Pumpenrad. Das die Funktion des Rotorschaufelrades übernehmende Schaufelrad ist in beiden Fällen mit der Getriebeausgangswelle über den mechanischen Getriebeteil gekoppelt. Die Anbindung der Turbokupplung an die Antriebswelle bzw. den mechanischen Getriebeteil der Getriebebaueinheit erfolgt dabei derart, dass zur Realisierung des ersten Betriebszustandes das Turbinenrad mit dem mechanischen Getriebeteil und das Pumpenrad mit der Getriebeeingangswelle verbindbar ist, während zur Realisierung der zweiten Betriebsweise, d.h. Abbremsung, eines der beiden Schaufelräder festgesetzt wird. Zu diesem Zweck sind der Turbokupplung, insbesondere einem Schaufelrad der Turbokupplung Mittel zur Festsetzung und Entkopplung vom Antriebsstrang zugeordnet. Diese Ausführung erlaubt zwar die Gestaltung einer besonders kompakten Getriebebaueinheit, ein wesentlicher Nachteil besteht Jedoch darin, dass die Realisierung der beiden Funktionsweisen eine entsprechend modifizierte Ausgestaltung bzw. Auslegung der Anschlusselemente bedingt und des weiteren, dass beide Funktionen nur wechselweise genutzt werden können, d.h. dass während des Betriebszustandes der Leistungsübertragung über die hydrodynamische Kupplung keine Erzeugung eines Bremsmomentes mittels einer Dauerbremseinrichtung, insbesondere einem hydrodynamischen Retarder möglich ist. Des weiteren ist aufgrund der speziellen Form der Anbindung keine Schaffung eines standardisierten Anfahrelementes, welches auch frei austauschbar in bereits vorhandene Getriebebaueinheiten einsetzbar wäre, realisierbar. Die einzelnen Funktionszustände erfordern neben einer entsprechend raschen Befüllbarkeit und Entleerbarkeit des torusförmigen Arbeitsraumes mit Betriebsmittel eine entsprechende Ansteuerung hinsichtlich der Festsetzung des Sekundärrades als Stator oder der drehfesten Kopplung mit dem anschließenden Getriebeteil. Eine Überschneidung, d.h. eine Änderung zwischen drehfester Kopplung und Festhalten des Sekundärrades und gleichzeitig noch vorhandener Befüllung, insbesondere Teilfüllung des torusförmigen Arbeitsraumes kann eine unerwünschte Beeinflussung der Leistungsübertragung zur Folge haben.

Anfahreinheiten sind ferner aus den nachfolgend genannten Druckschriften bekannt:
1. US-A-2 965 202
2. US-A-3 818 782
3. DE 712 767 C

Dabei ist aus der unter erstens genannten Druckschrift eine Anfahreinheit, umfassend einen hydrodynamischen Drehzahl-/Drehmomentwandler und eine Überbrückungskupplung bekannt, bei welcher bei Anlegen eines Druckes an die Überbrückungskupplung eine Kopplung mit einer Ventileinrichtung erfolgt, welche die Befüllung des hydrodynamischen Wandler mit Betriebsmittel steuert. Die Entleerung des hydrodynamischen Drehzahl-/Dremomentwandlers erfolgt dabei nicht zwangsläufig durch Ansteuerung der Überbrückungskupplung, sondern kann durchaus auch zeitlich verzögert aufgrund des in dieser Druckschrift beschriebenen Konzeptes erfolgen, wodurch eine gewünschte schnelle Entleerung in der Regel nicht erreicht wird.

Der Erfindung liegt daher die Aufgabe zugrunde, ein Anfahrelement für den Einsatz in Schaltgetrieben, insbesondere automatisierten Schaltgetrieben in Antriebssystemen von Fahrzeugen, insbesondere Nutzkraftwagen derart weiterzuentwickeln, daß die oben genannten Nachteile vermieden werden. Im einzelnen ist dabei auf die Realisierung eines möglichst verschleißfreien Anfahrvorganges abzustellen, unabhängig von der Zeitdauer des Zustandes erhöhten Schlupfes. Das Anfahrelement sollte dabei durch einen geringen konstruktiven und steuerungstechnischen Aufwand charakterisierbar und leicht in das Antriebssystem bzw. in die Kraftübertragungseinheit, beispielsweise in Form einer Getriebebaueinheit, integrierbar sein, wobei den zunehmend erhöhten Anforderungen an eine geringe Baulänge Rechnung getragen werden sollte. Desweiteren muß das Anfahrelement den Anforderungen, bedingt durch den Aufbau als Schaltgetriebe, insbesondere automatisiertes Schaltgetriebe gerecht werden, das heißt beim Einsatz in automatisierten Schaltgetrieben soll während der Schaltvorgänge beziehungsweise zur Realisierung eines Gangwechsels die Leistungsübertragung zwischen Getriebebaueinheit und Antriebsmaschine voll unterbrechbar sein.

Die Druckschriften DE 712 767 C und US-PS 3,818,782 offenbaren Entleermöglichkeiten für hydrodynamische Bauelemente in Form von hydrodynamischen Kupplungen und Bremseinrichtungen. Aus der Druckschrift DE 712 767 ist dabei eine Möglichkeit vorbekannt, bei welcher die Entleerung durch Öffnungen am Umfangsteil des diese umschließenden > Gehäuses der Flüssigkeitskupplung erfolgt. Die Entleerung erfolgt dabei drehzahlabhängig.

Unter einem weiteren Aspekt der Erfindung sollen die Vorteile einer multifunktionalen Komponente beibehalten werden, wobei diese jedoch in einfacher Art und Weise auch in bereits vorhandene Schaltgetriebebaueinheiten, insbesondere automatisierte Schaltgetriebe einfügbar sein muß.

Die erfindungsgemäße Lösung ist durch die Merkmale der Ansprüche 1 und 2 charakterisiert. Vorteilhafte Ausgestaltungen sind jeweils in den Unteransprüchen beschrieben.

Erfindungsgemäß umfaßt die Anfahreinheit eine Turbokupplung mit wenigstens einem Pumpenrad und einem Turbinenrad, die miteinander wenigstens einen torusförmigen Arbeitsraum bilden, und eine Überbrückungskupplung, wobei die Turbokupplung und die Überbrückungskupplung parallel geschaltet, jedoch nur während zeitlich geringer oder definierter Phasen beide gemeinsam in Eingriff sind. Parallel geschaltet bedeutet, daß zur Leistungsübetragung in den einzelnen Funktionszuständen entweder nur die Überbrückungskupplung oder die Turbokupplung im Einsatz ist. Die Turbokupplung ist regelbar. Die Funktion der Regelbarkeit wird dabei über die Beeinflussung der Befüllung und/oder Entleerung des Arbeitsraumes der Turbokupplung mit Betriebsmittel und/oder des Füllungsgrades während der Betätigung der Turbokupplung realisiert Ein erster Schaltzustand ist dabei durch das Befüllen der Turbokupplung beschreibbar. Ein zweiter Schaltzustand durch das Entleeren. Die Entleerung der Turbokupplung, insbesondere des torusförmigen Arbeitsraumes zwischen Pumpen- und Turbinenrad wird dabei erfindungsgemäß durch die Ansteuerung der Überbrückungskupplung ausgelöst. Dabei bestehen die folgenden Möglichkeiten:
- gleichzeitige Einleitung der Entleerung oder Befüllung der Turbokupplung, insbesondere des torusförmigen Arbeitsraumes und Betätigung der Überbrückungskupplung, das heißt Ineingriffbringen oder Lösen oder
- zeitliche Verzögerung zwischen der Einleitung der Entleerung bzw. Befüllung des torusförmigen Arbeitsraumes der Turbokupplung und der Ansteuerung der Überbrückungskupplung.

Insbesondere bei automatisierten Schaltgetrieben spielt der zeitliche Versatz und damit die mögliche Unterbrechung des Leistungsflusses zwischen der Antriebsmaschine und der Getriebebaueinheit eine bedeutende Rolle. Dabei wird unter dem ersten Schaltzustand der Entleerung oder dem zweiten Schaltzustand, welcher durch die Befüllung des torusförmigen Arbeitsraumes beschreibbar ist, der Gesamtzeitraum verstanden, welcher durch das Entleeren, das heißt der Einleitung des Entleerens beziehungsweise des Befüllens und des Abschlusses dieses Vorganges gekennzeichnet ist. Die Einleitung des Entleervorganges beziehungsweise des Befüllens kann somit gleichzeitig oder zeitlich versetzt zur Ansteuerung der Überbrückungskupplung erfolgen.

Der Vorteil der Realisierung der Schaltbarkeit durch Befüllen und/oder Entleeren der Turbokupplung, insbesondere des torusförmigen Arbeitsraumes der Turbokupplung besteht dabei darin, daß die ohnehin erforderlichen Mittel zur Befüllung und/oder Entleerung und/oder der Beeinflussung des Füllungsgrades und damit der konstruktive Aufbau der Turbokupplung beibehalten werden kann und lediglich durch Ansteuerung dieser Mittel die Schaltbarkeit realisiert wird.

Der Vorteil einer derartigen Anordnung besteht desweiteren darin, daß im wesentlichen jeweils nur zwei Zustände bezüglich der Leistungsübertragung vom Antrieb zum Abtrieb unterschieden werden können, wobei die Leistungsübertragung entweder rein mechanisch über die Überbrückungskupplung oder über das hydrodynamische Bauelement, die Turbokupplung erfolgt. Dies ermöglicht durch geeignete Ansteuerung die Ausnutzung der Vorteile der Leistungsübertragung mittels hydrodynamischer Komponenten für bestimmte Fahrzustände, insbesondere für den Anfahrzustand. Dieser kann vollständig verschleißfrei erfolgen, wobei in allen anderen Fahrzuständen die Turbokupplung nicht in den Leistungsfluß eingebunden ist. Ab einem bestimmten Schlupfzustand, welcher abhängig von der Auslegung der Turbokupplung ist, erfolgt die Überbrückung durch eine Kopplung zwischen Pumpen- und Turbinenrad mittels der mechanischen Überbrückungskupplung. Die Antriebsleistung von einer mit dem Anfahrelement koppelbaren Antriebsmaschine wird dann mit nur geringen Verlusten, bedingt durch die mechanischen Übertragungssysteme, auf den Abtrieb übertragen. Da für den Einsatz in Schaltgetrieben, insbesondere synchronisierten Schaltgetrieben beim Wechsel zwischen zwei Gangstufen die Verbindung zwischen der Antriebsmaschine und dem Abtrieb in der Regel getrennt werden sollte, kann diese Aufgabe der Überbrückungskupplung zugeordnet werden.

Für den Einsatz in Antriebssträngen, insbesondere bei Integration in Leistungsübertragungseinrichtungen, beispielsweise Getrieben, insbesondere automatisierten Getrieben in Antriebssträngen, muß zum Wechsel der Gangstufe die Verbindung zwischen der Antriebsmaschine und dem Abtrieb getrennt werden. Dies erfolgt dann mit Hilfe der Überbrückungskupplung, welche die Funktion der Leistungsübertragung in den Fahrzuständen außerhalb des Anfahrzustandes übernimmt. Die Möglichkeit der Schalt- und Regelbarkeit der Turbokupplung beinhaltet die Möglichkeit der Inbetriebnahme und Außerbetriebnahme dieses Bauelementes. Daraus resultiert eine eindeutige Funktionszuweisung dieses Bauelementes beim Einsatz in einem Antriebsstrang zum Zwecke der Leistungsübertragung während des Anfahrvorganges. Der Leistungsfluß erfolgt während des Anfahrvorganges ausschließlich über die Turbokupplung, wobei dieser aufgrund der Vorteile hydrodynamischer Leistungsübertragung verschleißfrei ist.

Unter einem weiteren Aspekt der Erfindung ist die Turbokupplung der Anfahreinheit steuer- und/oder regelbar. Die Steuer- und/oder Regelbarkeit beinhaltet dabei die beiden Schaltzustände - erster Schaltzustand und zweiter Schaltzustand. Die erfindungsgemäße Ausführung des Anfahrelementes mit Überbrückungskupplung ermöglicht die Schaffung einer konstruktiv einfach gestalteten modularen Baueinheit, die in ein Antriebssystem, vorzugsweise eine Getriebebaueinheit integrierbar ist und die aufgrund der eindeutigen Funktionszuweisung durch die Schalt- oder Steuer- und/oder Regelbarkeit ein verschleißloses Anfahren im Einsatz in Antriebssträngen von Fahrzeugen, insbesondere Nutzkraftwagen ermöglicht.

Die Steuerung der Turbokupplung, insbesondere die Steuerung des Füllund/oder Entleervorganges und/oder der Beeinflussung des Füllungsgrades erfolgt in Abhängigkeit einer Sollgröße, welche den Wunsch nach Inbetriebnahme und/oder Außerbetriebnahme und/oder Änderung der übertragbaren Leistung wenigstens mittelbar charakterisiert direkt oder indirekt, d.h. die Stellgröße zur Ansteuerung der entsprechenden Stelleinrichtungen wird direkt oder über Zwischenschritte ermittelt.

Unter einem weiteren Aspekt der Erfindung kann die Steuerung auch in einen Regelvorgang, beispielsweise der Regelung des Füllungsgrades, eingebunden werden.

Zur Gewährleistung der sicheren Funktionszuweisung für die Komponenten Turbokupplung und Überbrückungskupplung sind neben der Auslösung des Schaltvorganges auch die Steuer- und/oder Regelvorgänge an die Betätigung der Überbrückungskupplung gebunden, das heißt eine vollständige Befüllung und/oder Entleerung des torusförmigen Arbeitsraumes oder der teilweisen Befüllung und/oder Entleerung wird durch die Ansteuerung der Überbrückungskupplung ausgelöst. Dadurch werden Doppelbetätigungen und damit negative Beeinflussungen in der Leistungsübertragung vermieden. Bezüglich der Realisierung der funktionellen Koppelung zwischen dem Schaltoder Steuer- und/oder Regelvorgang der Turbokupplung und der Betätigung der Überbrückungskupplung bestehen eine Vielzahl von Möglichkeiten. Die Kopplung kann dabei
a) direkt oder
b) indirekt
mechanisch oder hydraulisch oder elektrisch oder durch eine Mischform aus den einzelnen Möglichkeiten erfolgen. Bei der direkten Kopplung fungieren entweder die Betätigungselemente oder einzelne Elemente der Überbrückungskupplung als Stellelemente für die Mittel zur Beeinflussung der Betriebsmittelversorgung bzw. des Betriebsmittelumlaufes in der Turobkupplung. Dabei wird beispielsweise die Relativbewegung einzelner Kupplungselemente bzw. Betätigungselemente bei der Betätigung der Überbrückungskupplung ausgenutzt. im zweiten Fall, bei indirekter Kopplung, erfolgt die Ansteuerung der Mittel zur Beeinflussung der Füllung und/oder Entleerung und/oder des Betriebsmittelumflaufes in der Turbokupplung in Abhängigkeit einer die Betätigung der Überbrückungskupplung wenigstens mittelbar charakterisierenden Größe. Vorzugsweise findet jedoch erstere Variante Anwendung, da bei dieser durch die konstruktive Ausführung sichergestellt ist, daß in Abhängigkeit eines bei Betätigung der Überbrückungskupplung umgesetzten Weges oder Druckes eine Beaufschlagung der Mittel zur Beeinflussung der Betriebsmittelversorgung bzw. des Betriebsmittelumlaufes in der Turbokupplung realisiert wird. In beiden Fällen erfolgt die Ansteuerung der Mittel zur Beeinflussung der Betriebsmittelversorgung weg- oder druckabhängig.

Unter einem weiteren Aspekt der Erfindung erfolgt zur Gewährleistung einer sicheren Funktionsweise und raschen Inbetriebnahme der Turbokupplung der Füllvorgang der Turbokupplung, insbesondere des Arbeitsraumes der Turbokupplung mit Unterstützung von Druck. Dabei werden zwei grundlegende Varianten unterschieden:
a) die Ausnutzung eines statischen Differenzdruckes, welcher auf einem Betriebsmittelsumpf wirkt oder
b) die Ausnutzung eines dynamischen Druckes, welcher beispielsweise durch eine Betriebsmittelfördereinrichtung aufgebracht wird.

Im erstgenannten Fall erfolgt der Aufbau des statischen Differenzdruckes entweder
a) aus einem bereits vorhandenen Druckluftnetz beim Einsatz des Anfahrelementes in Antriebssträngen von Fahrzeugen oder
b) über einen separaten Druckluftspeicher oder
c) aufgrund eines Höhenunterschiedes zwischen Betriebsmitteltank bzw. Speicher und dem Arbeitsraum;
d) durch einen Druckspeicher in Form eines Gas- oder Federspeichers.

Im zweiten Fall erfolgt die Befüllung mit Unterstützung einer Betriebsmittelfördereinrichtung in Form einer Pumpe. Die Ausführungen a) und b), sowie das Vorsehen einer Betriebsmittelfördereinrichtung sind unabhängig von der Anordnung der Betriebsmittelversorgungsquelle, beispielsweise des Betriebsmittelsumpfes gegenüber dem Anfahrelement in Einbaulage, d.h. unabhängig davon, ob die Förderung des Betriebsmittels zum Arbeitsraum entgegen oder in Richtung der Schwerkraft erfolgt.

Bei Vorsehen einer Betriebsmittelfördereinrichtung in Form einer Pumpe kann zusätzlich die durch die Ölpumpe erzeugte hydraulische Energie beim Einsatz des Anfahrelementes in einer Getriebebaueinheit zum Schalten des Getriebes verwendet werden. Damit wird beim Einsatz in automatisierten Schaltgetrieben dieses unabhängig von der Druckluftversorgung oder anderer Energieversorgung. In diesem Fall entfallen aufwendige Druckspeicher und ein Temperatureinfluß auf die Funktionsweise ist nicht gegeben.

Unter einem weiteren Aspekt der Erfindung wird eine Beschleunigung der Entleerung über eine Ventileinrichtung, welche als Druckwaage ausgebildet ist und die einerseits durch den Rotationsdruck aus dem torusförmigen Arbeitsraum und andererseits durch den Rotationsdruck in einem im Primärrad vorgesehenen Bohrungssystem zwischen dem Ventilsitz und der Fangrinne auf der Füllkanalseite der Kupplung beaufschlagt wird, vorgeschlagen. Die Gestaltung und Auslegung der Kolbenflächen der Ventileinrichtung erfolgt dabei derart, daß bei geschlossenem Kühlkreislauf, das heißt einem geschlossenen Kreislauf aus dem torusförmigen Arbeitsraum, insbesondere vom Auslaß aus dem torusförmigen Arbeitsraum in den Einlaß in den torusförmigen Arbeitsraum und ständig anliegendem Füllöl an der Füllstelle, die aus dem Rotationsdruck im Bohrungssystem des Primärrades resultierende Kolbenkraft gegenüber der Gegenkraft aus dem Arbeitsraum überwiegt. In diesem Fall bleibt die Entleerstelle verschlossen. Erst beim Sperren der Zufuhr von Betriebsmittel zum Einlaß wird der Druck auf der mit der Befüllstelle verbundenen Kolbenseite geringer, da über eine Dauerauslaßbohrung Betriebsmittel, insbesondere Öl aus dem Bohrungssystem, über das Ventil in die Pumpschale der Kupplung entweicht. Es überwiegt damit die Kraft auf den Kolben von der Arbeitsraumseite, d.h. der im Arbeitsraum vorherrschende Rotationsdruck. Die Ventileinrichtung öffnet den zusätzlichen Auslaßquerschnitt.

Eine weitere Möglichkeit besteht darin, daß aktiv der Auslaßquerschnitt beeinflußt wird. Insbesondere kann eine schnelle Entleerung durch das Öffnen des Auslaßquerschnittes beziehungsweise eine Vergrößerung realisiert werden. Wird dabei ein Umschaltventil im Kühlkreislauf, das heißt im geschlossenen Kreislauf vom Auslaß aus dem torusförmigen Arbeitsraum in den Einlaß in den torusförmigen Arbeitsraum nach Durchlaufen einer Kühleinrichtung auf Entleeren gestellt, wird ein Teil des Betriebsmittels abgezweigt und gelangt in das Bohrungssystem des Primärrades. Dort baut sich ein Rotationsdruck auf. Dadurch wirkt eine Kraft auf den Kolben der Ventileinrichtung, welcher gegen eine Feder arbeitet und den Entleerquerschnitt öffnet. Wird das Umschaltventil wieder auf den geschlossenenen Betriebsmittelkreislauf umgestellt, so ergibt sich eine Entlastung an der Kolbenfläche der Ventileinrichtung. Das Bohrungssystem entleert über den Dauerauslaß in die Pumpschale, insbesondere den Staudruckpumpenraum und die Schnellentleerventileinrichtung wird mittels Federkraft wieder geschlossen.

Bezüglich der konstruktiven Ausführung der Anfahreinheit bestehen eine Vielzahl von Möglichkeiten. Entscheidend ist lediglich, daß beide Elemente parallel geschaltet sind und deren Abtriebsseiten miteinander drehfest verbunden werden. Die drehfeste Verbindung kann dabei lösbar oder unlösbar bezüglich der Montage erfolgen. Die Verbindung selbst kann im erstgenannten Fall form- und/oder kraftschlüssig erfolgen. Im zweiten Fall wird die drehfeste Verbindung entweder durch Stoffschluß oder durch Ausführung als integrale Baueinheit von Turbinenrad der Turobkupplung und Kupplungsausgangsscheibe der Überbrückungskupplung realisiert. Die Auswahl erfolgt dabei in Abhängigkeit von der vorzunehmenden Auslegung der Turbokupplung und/oder Überbrückungskupplung und den konkreten Erfordernissen des Einsatzfalles. Dabei wird jedoch in der Regel eine platzsparende Anordnung bevorzugt.

Unter einem weiteren Aspekt der Erfindung handelt es sich bei der Überbrückungskupplung um eine mechanische Kupplung in Scheibenbauweise, die als nasse Lamellenkupplung ausgeführt ist. Dies bedeutet, daß die Lamellen naß laufen. Dies kann auf einfache Art und Weise dadurch realisiert werden, daß der Betriebsmittelsumpf der Turbokupplung gleichzeitig als Schmiermittel für die Überbrückungskupplung genutzt wird. In diesem Fall sind keine zusätzlichen Abdichtmaßnahmen zwischen Turbokupplung und Überbrückungskupplung vorzusehen und es kann eine Betriebsmittelversorgungsquelle für zwei unterschiedliche Funktionen, nämlich die Funktionsweise der hydrodynamischen Kupplung und die Schmierung der Überbrückungskupplung verwendet werden. Damit wird eine hinsichtlich Aufbau und Funktionalität besonders kompakte Bauform einer verschleißfreien Anfahreinheit realisiert.

Vorzugsweise erfolgt die Integration beider Komponenten, Turbokupplung und Überbrückungskupplung, in einem gemeinsamen Gehäuse, wobei die Überbrückungskupplung im Betriebsmittel der Turbokupplung umläuft. Das gemeinsam genutzte Gehäuse kann dabei entweder vom Gehäuse der Turbokupplung, einem separaten Gehäuse oder den Anschlußelementen - beispielsweise dem Gehäuse der Antriebsmaschine und/oder des Getriebes bei Integration in einem Antriebssystem für ein Fahrzeug - gebildet werden. Denkbar ist in diesem Fall beispielsweise die Ausbildung des Gehäuses entweder allein von der mit der Anfahreinheit koppelbaren Antriebsmaschine und/oder der mit der Anfahreinheit koppelbaren Getriebebaueinheit oder von beiden anschließenden Komponenten.

Die erfindungsgemäß gestaltete Anfahreinheit baut sehr klein und hat somit bei Integration in einer Getriebebaueinheit nur geringen Einfluß auf die Baulänge. Die Einheit aus Turbokupplung und Überbrückungskupplung kann als modulare Baueinheit vormontiert im Handel angeboten und geliefert werden. Die Integration in einer Getriebebaueinheit erfolgt dann kraftschlüssig und/oder formschlüssig, beispielsweise durch Aufstecken der modularen Baueinheit auf die Getriebeeingangswelle oder die Realisierung einer Welle-Nabe-Verbindung zwischen dem Abtrieb des Anfahrelementes und dem Eingang der Getriebebaueinheit, wobei die Kopplung durch eine mechanische Verbindung mit dem Gehäuse der Getriebebaueinheit und/oder der Antriebsmaschine erfolgt. Unter einem weiteren Aspekt der Erfindung können die Anschlußelemente der Anfahreinheit - Antrieb und Abtrieb - für eine Mehrzahl unterschiedlich ausgelegter Anfahreinheiten standardisiert ausgeführt werden, was zu einer Verringerung der Fertigungskosten führt und in Kombination mit Getriebebaueinheiten zur Anpassung an verschiedene Einsatzfälle eine leichte Austauschbarkeit der Anfahrelemente ermöglicht, Zur Schaffung einer multifunktionalen Anfahreinheit weist diese unter einem weiteren Aspekt der Erfindung des weiteren wenigstens ein Bremselement auf, welches vorzugsweise in Form eines hydrodynamischen Retarders ausgeführt ist. Bezüglich der Anbindung des Bremselementes an das Anfahrelement bestehen grundsätzlich die folgenden zwei Möglichkeiten:
a) Anbindung der Bremseinrichtung an den Antrieb bzw. den Eingang des Anfahrelementes in Form der Turbokupplung
b) Anbindung der Bremseinrichtung an den Abtrieb des Anfahrelementes in Form der Turbokupplung

Im erstgenannten Fall sind wenigstens die nachfolgenden zwei Möglichkeiten der Anbindung denkbar:
a) Koppelung der Bremseinrichtung mit dem Pumpenrad der Turbokupplung
b) Koppelung der Bremseinrichtung mit dem Eingang, beispielsweise der Antriebswelle des Anfahrelementes.

Die erstgenannte Möglichkeit bietet den Vorteil, daß bei Ausführung der Bremseinrichtung in Form eines hydrodynamischen Retarders der Rotor des hydrodynamischen Retarders mit dem Pumpenrad der Turbokupplung drehfest verbunden ist, wobei der Rotor der hydrodynamischen Bremseinrichtung und das Pumpenrad der Turbokupplung entweder auf einer gemeinsamen Welle angeordnet sind oder aber Rotor und Pumpenrad aus einem Bauelement gebildet werden.

Bezüglich der räumlichen Anordnung der Bremseinrichtung gegenüber den anderen Komponenten des Anfahrelementes bestehen folgende Möglichkeiten:
a) Anordnung in Einbaulage im Antriebssystem in Kraftflußrichtung vom Antrieb zum Abtrieb betrachtet vor der Turbokupplung
b) Anordnung in Einbaulage im Antriebssystem in Kraftflußrichtung vom Antrieb zum Abtrieb betrachtet zwischen Überbrückungskupplung und Turbokupplung
c) Anordnung in Einbaulage im Antriebssystem in Kraftflußrichtung vom Antrieb zum Abtrieb betrachtet hinter der Turbokupplung.

In jedem der genannten Fälle erfolgt jedoch die Anordnung der Bremseinrichtung, insbesondere des hydrodynamischen Retarders in räumlicher Nähe zur Turbokupplung bzw. Überbrückungskupplung. Die Bremseinrichtung kann in der modularen Einheit aus Turbokupplung und Überbrückungskupplung integriert werden. Dies bietet den Vorteil, daß zum einen eine vormontierbare und selbständig handelbare multifunktionale Anfahr- und Bremseinheit zur Integration in Antriebssträngen, insbesondere für Getriebebaueinheiten geschaffen wird und aufgrund der möglichen Verwendung gleicher Betriebsmittel, beiden Systemen ein gemeinsames Betriebsmittelversorgungs- und/oder Führungssystem zugeordet werden kann, wobei gleichzeitig die Kühleinrichtungen und/oder Steuereinrichtungen gemeinsam nutzbar sind. Diese Einrichtungen können zusätzlich in der modularen Einheit integriert werden. Die gemeinsame Nutzung von Kühleinrichtungen und/oder Steuereinrichtungen ist jedoch nicht an die gemeinsame Nutzung eines Betriebsmittelversorgungs- und/oder Führungssystems gebunden, jeder Komponente kann ein eigenes System zugeordnet sein.

Der Vorteil eines gemeinsamen Betriebsmittelversorgungs- und/oder Führungssystems und/oder einer gemeinsam nutzbaren Kühleinrichtung für das Betriebsmedium besteht in einer Verringerung des konstruktiven Aufwandes für die zur Realisierung der Funktionsweise der hydrodynamischen Elemente erforderlichen Leitungssysteme, insbesondere kann eine optimale Ausnutzung der Systeme erfolgen, da die Inbetriebnahme der Turbokupplung und des hydrodynamischen Retarders bei unterschiedlichen Funktionszuständen erfolgt. Der hydrodynamische Retarder nutzt damit quasi das Betriebsmittelversorgungssystem und/oder die Kühleinrichtung bzw. das Kühlsystem in den Funktionszuständen, in welchen die Turbokupplung nicht betätigt ist, während die Turbokupplung das Betriebsmittelversorgungs - bzw. Führungssystem und/oder die Kühleinrichtung bzw. das Kühlsystem in den Funktionszuständen ausnutzt, in welchen der Retarder nicht betätigt ist. Die Auslegung des Betriebsmittelversorgungssystems und/oder der Kühleinrichtungen bzw. des Kühlsystems erfolgt dabei entsprechend der höher belasteten Komponente, wobei eine optimale Ausnutzung durch die wechselseitige Nutzung durch Turbokupplung und hydrodynamischen Retarder gewährleistet wird.

Als weitere Komponente umfaßt die Anfahreinheit vorzugsweise eine Einrichtung zur Schwingungsdämpfung, vorzugsweise einen Torsionsschwingungsdämpfer. Dieser ist funktional entweder der Antriebsseite oder der Abtriebsseite zuordenbar, wobei bezüglich der räumlichen Anordnung zwischen der Anordnung des Torsionsschwingungsdämpfers in Einbaulage betrachtet
a) räumlich vor der Turbokupplung und vor der Überbrückungskupplung,
b) räumlich vor der Turbokupplung und hinter der Überbrückungskupplung oder
c) räumlich hinter der Turbokupplung
unterschieden werden kann.

Die Kombination aus Turbokupplung, Überbrückungskupplung sowie eventuell zusätzlich hydrodynamischen Retarder und/oder Torsionsschwingungsdämpfer und die Integration in einer modularen Baueinheit ermöglicht die Schaffung einer multifunktionalen Antriebskomponente mit geringem Bauraumbedarf, wobei diese Elemente in einem gemeinsamen Gehäuse integriert sein können. Als gemeinsames Gehäuse kann dabei das Gehäuse der Turbokupplung und/oder des hydrodynamischen Retarders verwendet werden. Denkbar ist es jedoch auch, das Gehäuse von den Gehäusen der Anschlußelemente zu bilden. Die Koppelung mit den Anschlußelementen, beispielsweise einer Getriebebaueinheit, insbesondere dem mechanischen Übertragungsteil einer Getriebebaueinheit, erfolgt durch Kraft- und/oder Formschluß. Im einfachsten Fall wird die gesamte modulare Baueinheit auf die Getriebeeingangswelle aufgesteckt. Andere Ausführungen der Realisierung der Verbindung zwischen Abtrieb des Anfahrelementes bzw. der Anfahreinheit und Getriebeeingangswelle sind denkbar und liegen im Ermessen des zuständigen Fachmannes.

Die erfindungsgemäße Lösung ist nachfolgend anhand von Figuren erläutert. Darin ist im einzelnen folgendes dargestellt:
- Figur 1: verdeutlicht eine Möglichkeit der konstruktiven Ausführung einer erfindungsgemäß gestalteten Anfahreinheit mit einer Anbindung des hydrodynamischen Retarders an den Antrieb des Anfahrelementes und Anordnung eines Torsionsschwingungsdämpfers zwischen Überbrückungskupplung und Turbokupplung;
- Figur 2a-2c: verdeutlichen Ausführungen gemäß Figur 1 mit weiteren Anordnungsmöglichkeiten einer Einrichtung zur Schwingungsdämpfung und Anbindungsmöglichkeiten des hydrodynamischen Retarders an den Abtrieb des Anfahrelementes;
- Figur 3: zeigt eine mögliche konstruktive Ausführung für die Koppelung des Schalt- oder Steuer- und/oder Regelvorganges der Turbokupplung an die Betätigung der Überbrückungskupplung;
- Figur 4a-4b: zeigen schematisiert vereinfacht konstruktive Ausführungsmöglichkeiten der Realisierung einer raschen Entleerbarkeit des Arbeitsraumes der Turbokupplung.

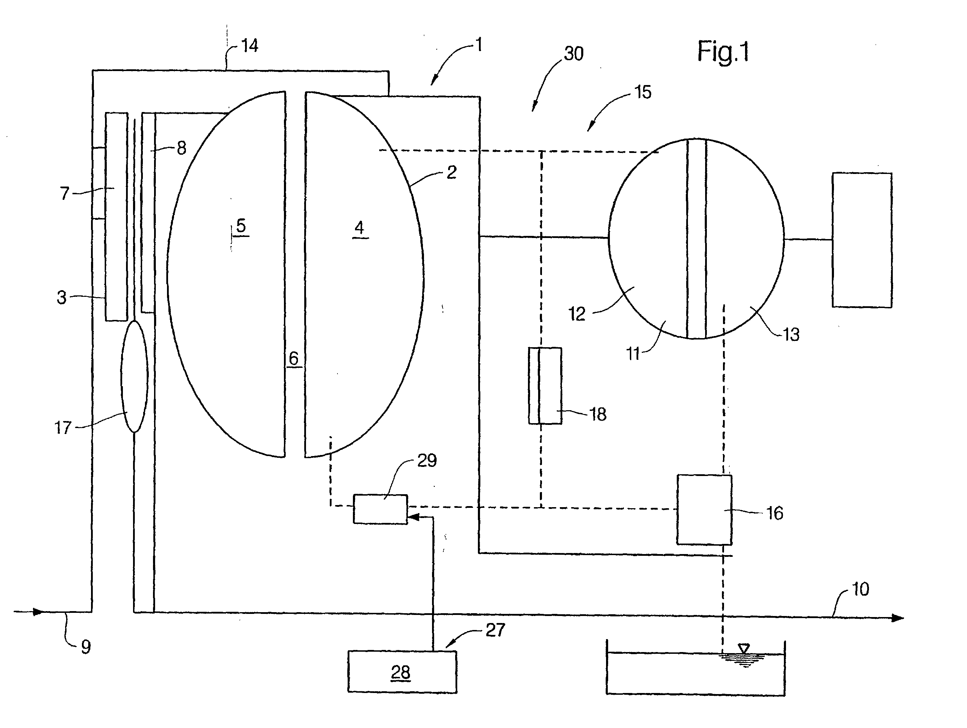

Die Figur 1 verdeutlicht in schematisch vereinfachter Darstellung eine Ausgestaltung einer erfindungsgemäß gestalteten Anfahreinheit 30 mit einem Anfahrelement 1 in Form einer Turbokupplung 2 und einer Überbrückungskupplung 3. Die Turbokupplung 2 und die Überbrückungskupplung 3 sind parallel geschaltet. Die Turbokupplung 2 umfaßt wenigstens ein als Pumpenrad 4 fungierendes Primärrad und ein als Turbinenrad 5 fungierendes Sekundärrad, welche miteinander den torusförmigen Arbeitsraum 6 bilden. Die Überbrückungskupplung 3 ist als Scheibenkupplung ausgeführt, vorzugsweise in Form einer Lamellenkupplung. Diese umfaßt wenigstens eine Kupplungseingangsscheibe 7 und eine Kupplungsausgangsscheibe 8, welche wenigstens mittelbar reibschlüssig miteinander in Wirkverbindung bringbar sind. Das Anfahrelement 1 und damit die Anfahreinheit 30 umfaßt des weiteren einen, mit einer hier nicht dargestellten Antriebsmaschine wenigstens mittelbar koppelbaren Antrieb 9 und einen mit dem Abtrieb im Antriebssystem wenigstens mittelbar koppelbaren Abtrieb 10. Antrieb 9 und/oder Abtrieb 10 sind in der Regel in Form von Voll- oder Hohlwellen ausgeführt. Vorzugsweise sind die Abtriebsseite der Turbokupplung 2 und der Überbrückungskupplung 3 miteinander drehfest verbunden. Als Abtriebsseite der Turbokupplung 2 fungiert dabei das Turbinenrad 5 und als Abtriebsseite der Überbrückungskupplung 3 die Kupplungsausgangsscheibe 8. Der Leistungsfluß über das Anfahrelement erfolgt beim Einsatz in Fahrzeugen im Traktionsbetrieb betrachtet, d.h. bei Leistungsübertragung von einer Antriebsmaschine auf die anzutreibenden Räder entweder über die Turbokupplung 2 oder die Überbrückungskupplung 8. Der Abtrieb der Turbokupplung 2, d.h. das Turbinenrad 5 und der Abtrieb der Überbrückungskupplung 3, d.h. die Kupplungsausgangsscheibe 8 sind zu diesem Zweck wenigstens mittelbar mit dem Abtrieb 10 des Anfahrelementes 1 drehfest verbunden, welcher bei Integration des Anfahrelementes 1 in einer Getriebebaueinheit gleichzeitig als Antrieb bzw. Eingang der nachgeordneten Drehzahl-/Drehmomentenwandlungseinrichtungen, beispielsweise in Form von Planetenradsätzen und/oder Stirnradsätzen fungiert.

Die räumliche Anordnung der Überbrückungskupplung 3 gegenüber der Turbokupplung 2 erfolgt bei Integration der Anfahreinheit 30 in einem Antriebsstrang in Einbaulage in Kraftflußrichtung betrachtet räumlich vor der Turbokupplung 2. Die Realisierung des Anfahrvorganges erfolgt durch Betätigung bzw. Leistungsübertragung über die Turbokupplung 2. Die Überbrückungskupplung 3 ist in diesem Zustand nicht betätigt, d.h. geöffnet. Die Turbokupplung 2 übernimmt dabei die im wesentlichen verschleißfreie Übertragung des Momentes der mit dem Anfahrelement 1 gekoppelten Antriebsmaschine. In Abhängigkeit von der Auslegung der Turbokupplung 2 erfolgt ab Erreichen eines bestimmten Schlupfzustandes deren Überbrückung durch eine Kopplung von Pumpenrad 4 und Turbinenrad 5 mittels der Überbrückungskupplung 3. Die Vorzüge hydrodynamischer Leistungsübertragung werden dadurch im Bereich hoher Drehzahldifferenzen, d.h. im Anfahrbereich voll ausgenutzt, während in allen anderen Fahrzuständen, in denen sich eine hydrodynamische Leistungsübertragung negativ auf den Gesamtwirkungsgrad auswirken würde, der hydrodynamische Teil aus dem Leistungsfluß herausgenommen und die Leistung nach Abschluß des Anfahrvorganges durch Schließen der Überbrückungskupplung 3 im wesentlichen ohne Verluste auf den Abtrieb 10 und damit beim Einsatz in Fahrzeugen auf die Antriebsräder übertragen wird. Insbesondere wird dabei auf die Möglichkeit der nahezu verschleißfreien Leistungsübertragung im Bereich hohen Kupplungsschlupfes über einen sehr langen Zeitraum verwiesen.

Die Anfahreinheit 30 umfaßt des weiteren eine Bremseinrichtung 11, welche vorzugsweise als hydrodyamischer Retarder ausgeführt ist, um die Vorteile der hydrodynamischen Leistungsübertragung auch für den Bremsvorgang nutzen zu können. Der hydrodynamische Retarder 11 umfaßt dazu einen Rotor 12 und einen Stator 13. Die Anbindung des Rotors 12 und damit die Wirkung des hydrodynamischen Retarders erfolgt entsprechend Figur 1 an den Antrieb 9. Zu diesem Zweck kann der Rotor 12 des hydrodynamischen Retarders 11 beispielsweise direkt mit dem Pumpenrad 4 der Turbokupplung 2 koppelbar sein oder direkt auf den Antrieb 9 bzw. auf die Verbindung 14 des Antriebes 9 mit dem Pumpenrad 4 der Turbokupplung 2 einwirken. Der hydrodynamische Retarder 11 ist somit rein funktional betrachtet vor der Turbokupplung bzw. der Überbrückungskupplung angeordnet, räumlich jedoch in Einbaulage des Anfahrelementes bei Leistungsübertragung im Traktionsbetrieb vom Antrieb 9 zum Abtrieb 10 hinter der Überbrückungskupplung und der Turbokupplung 2 angeordnet. Die beiden hydrodynamischen Komponenten - Turbokupplung 2 und hydrodynamischer Retarder 11- sind räumlich eng beieinander angeordnet. Dies bietet den Vorteil, daß beispielsweise die Versorgungsleitungen für die hydrodynamischen Komponenten Turbokupplung 2 und hydrodynamischer Retarder 11 möglichst kurz gehalten werden können und zusätzlich beiden Komponenten ein gemeinsames Betriebsmittelversorgungssystem zugeordnet werden kann. Das Betriebsmittelversorgungssystem ist hier mit 15 bezeichnet. Dieses umfaßt Mittel zur Förderung des Betriebsmittels, beispielsweise eine Pumpeinrichtung 16 in Form einer Zahnradpumpe sowie Mittel zur Beeinflussung des Betriebsmittelumlaufes, beispielsweise in Form eines, hier lediglich angedeuteten Steuer- und/oder Regelsystems 27, umfassend wenigstens eine Steuereinrichtung 28 und Stelleinrichtungen 29 zur Beeinflussung der Betriebsmittelversorgung der Turbokupplung 2. Bei einem gemeinsam genutzten Betriebsmittelversorgungssystem werden auch die Mittel zur Kühlung des Betriebsmittels 18, welche beispielsweise in Form von Kühleinrichtungen oder von Wärmeaustauschern ausgeführt sind, von beiden Komponenten genutzt. Das Betriebsmittelversorgungssystem kann dabei als offener Kreislauf oder geschlossener Kreislauf ausgeführt sein. Im dargestellten Fall ist das Betriebsmittelversorgunsgsystem als offener Kreislauf 15 ausgeführt, wobei als Betriebsmittelversorgungsquelle beispielsweise ein Tank im Gehäuse der Turbokupplung 2 vorgesehen werden kann. Die Darstellung des Betriebsmittelversorgungssystems erfolgt in der Figur zu Erläuterungszwecken rein schematisch hinsichtlich der Funktionsweise.

Die Turbokupplung 2, die Überbrückungskupplung 3 sowie der hydrodynamische Retarder 11 bilden vorzugsweise eine modulare Baueinheit, welche vormontierbar und als eigenständige Baueinheit anbietbar und handelbar ist. Diese ist beispielsweise als Modul in einem Getriebe integrierbar. Die Integration kann dabei durch Aufstecken, Anflanschen oder eine andere Art der Verbindung realisiert werden. Zusätzlich im Modul integriert ist eine Einrichtung zur Schwingungsdämpfung in Form eines Torsionsschwingungsdämpfers 17, die im dargestellten Fall funktional dem Abtrieb 10 zugeordnet ist. Zu diesem Zweck ist der Torsionsschwingungsdämpfer 17 auf einer drehfest mit dem Abtrieb 10 verbundenen Welle angeordnet, wobei sowohl bei Leistungsübertragung über die Überbrückungskupplung 3 als auch über die Turbokupplung 2 der Torsionsschwingungsdämpfer 17 hinter diesen Komponenten wirksam wird. Rein räumlich in Einbaulage betrachtet ist der Torsionsschwingungsdämpfer 17 zwischen der Überbrückungskupplung 3 und der Turbokupplung 2 angeordnet. Die Integration des Torsionsschwingungsdämpfers 17 in einer modularen Baueinheit mit der Turbokupplung 2, der Überbrückungskupplung 3 sowie dem hydrodynamischen Retarder 11 ermöglicht die Schaffung einer kombinierten Anfahr- und Bremseinheit, welche als vormontierte Einheit in einem Getriebe integrierbar ist.

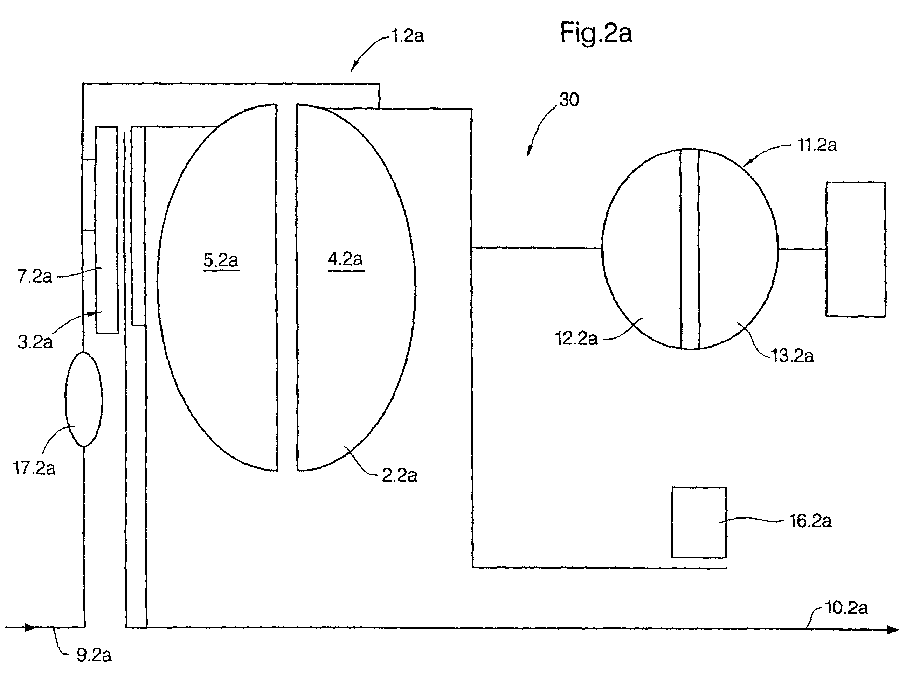

Die Figuren 2a bis 2c verdeutlichen in schematisch vereinfachter Darstellung eine weitere Ausführung einer erfindungsgemäß gestalteten Anfahreinheit. Gemäß Figur 2a umfaßt dieses eine Turbokupplung 2.2a, eine Überbrückungskupplung 3.2a, eine Bremseinrichtung 11.2a in Form eines hydrodynamischen Retarders und einen Torsionsschwingungsdämpfer 17.2a, Der Grundaufbau bezüglich der Anordnung von Überbrückungskupplung 3.2a, Turbokupplung 2.2a und hydrodynamischem Retarder 11.2a zueinander entspricht im wesentlichen dem in der Figur 1 beschriebenen, weshalb für gleiche Elemente die gleichen Bezugszeichen verwendet werden. Der Torsionsschwingungsdämpfer 17.2a ist hier jedoch auf der Antriebsseite 9.2a der Anfahreinheit 30 vor den Eingängen der Übertragungskupplung 3.2a bzw. der Turbokupplung 2.2a angeordnet. Der Torsionsschwingungsdämpfer 17.2a ist im dargestellten Fall mit der Kupplungseingangsscheibe 7.2a drehfest verbunden. Räumlich erfolgt die Anordnung des Torsionsschwingungsdämpfers 17.2a in Einbaulage des Anfahrelementes 1.2a in Kraftflußrichtung im Traktionsbetrieb betrachtet vor der Überbrückungskupplung 3.2a und der Turbokupplung 2.2a. Die einzelnen Komponenten Turbokupplung 2.2a, Überbrückungskupplung 3.2a, hydrodynamischer Retarder 11.2a und Torsionsschwingungsdämpfer 17.2a sind jedoch in unmittelbarer räumlicher Nähe zueinander angeordnet.

Die Ausführungen der Anfahreinheiten gemäß der Figuren 1 und 2a beinhalten einen primärseitig angeordneten Retarder 11 bzw. 11.2a, dessen Rotor 12 bzw. 12.2a mit dem Pumpenrad 4 bzw. 4.2a und damit direkt mit der Kopplung mit der Antriebsmaschine, d.h. z. B. der Kurbelwelle verbunden ist. Damit werden eine verschleißfreie Abbremsung beim Einsatz in Fahrzeugen ermöglicht und die gesetzlichen Anforderungen an die dritte unabhängige Bremse erfüllt. Entscheidend für diese Anbindung ist, daß bei Rück- und Hochschaltungen in einem, dem Anfahrelement 1 bzw. 1.2a nachgeordneten Getriebesatz keine zusätzlichen Schleppmomente durch den Retarder verursacht werden. Der Retarder 11 bzw. 11.2a wird im Fall einer Rückschaltung bezüglich seiner Bremswirkung abgeschaltet und nach erfolgter Rückschaltung mittels der mechanischen Überbrückungskupplung wieder zugeschaltet. Die Steuerung des Bremsmomentes selbst erfolgt durch Steuerung des Füllungszustandes.

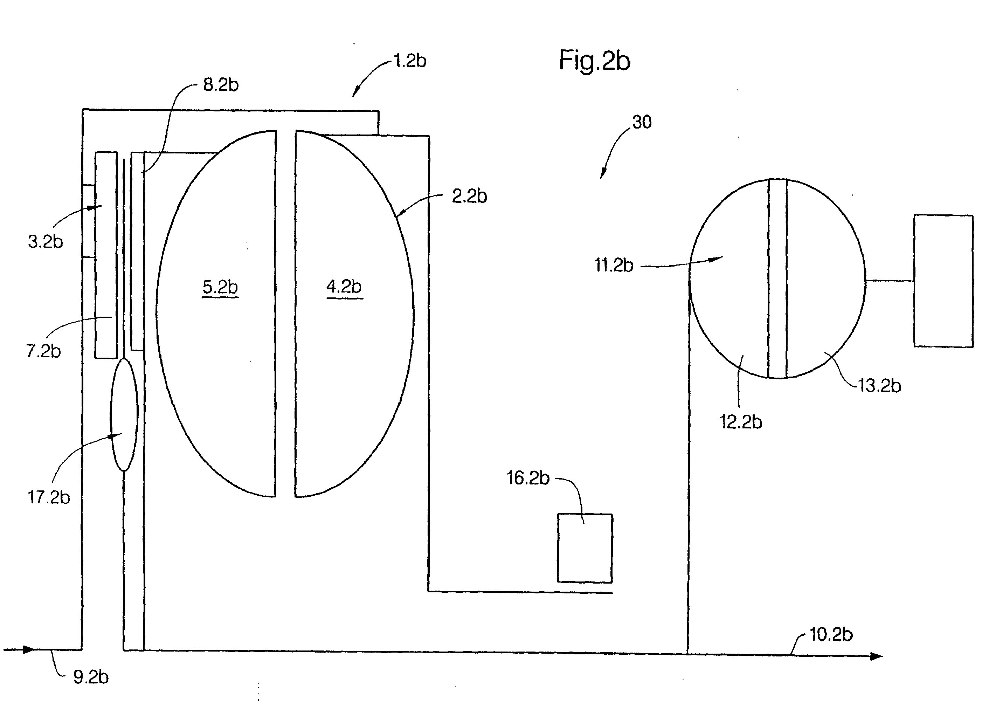

Die Figur 2b verdeutlicht eine Ausführung einer Anfahreinheit 30 gemäß der Figur 1 bezüglich der räumlichen und funktionalen Anordnung von Überbrückungskupplung 3.2b, Turbokupplung 2.2b und Torsionsschwingungsdämpfer 17.2b und der räumlichen Anordnung des hydrodynamischen Retarders 11.2b. Die Anbindung des Rotors 12.2b des hydrodynamischen Retarders 11.2b erfolgt jedoch am Abtrieb 10.2b des Anfahrelementes 1.2b bzw. der Anfahreinheit 30. Dies bedeutet im einzelnen eine drehfeste Kopplung mit dem Abtrieb, d.h. dem Turbinenrad 5.2b der Turbokupplung 2.2b bzw. dem Abtrieb der Überbrückungskupplung 3.2b, insbesondere der Kupplungsausgangsscheibe 8.2b und damit dem hier nicht dargestellten Eingang beispielsweise des nachgeordneten Getriebesatzes.

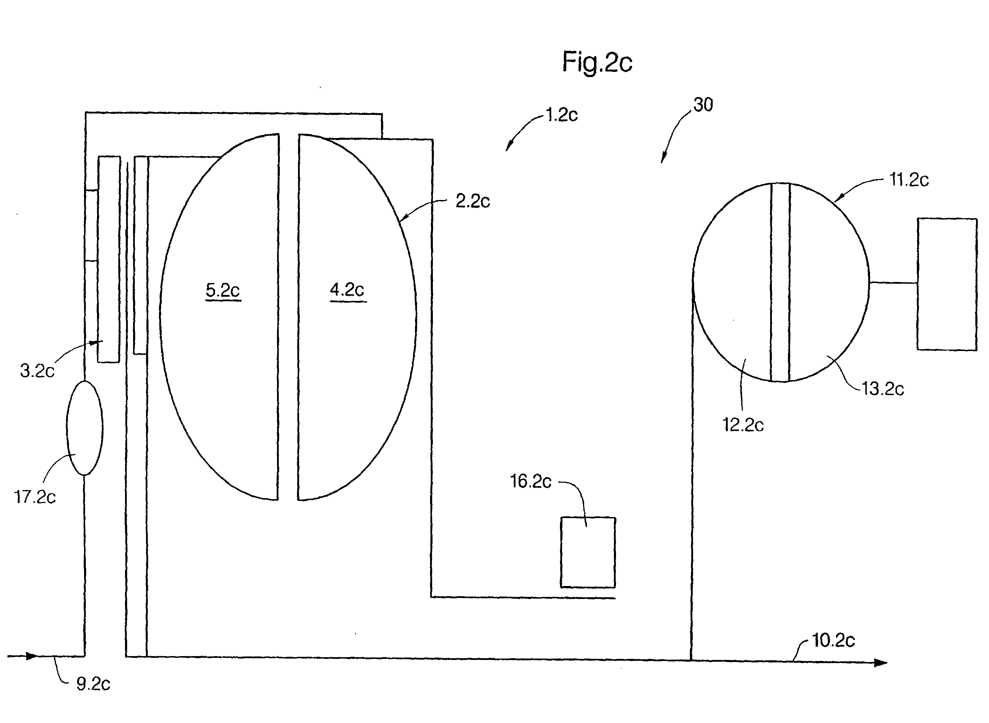

Die Figur 2c verdeutlicht eine Ausführung einer Anfahreinheit 30 mit einem Anfahrelement 1.2c gemäß Figur 2a hinsichtlich der Anordnung von Überbrückungskupplung 3.2c, Turbokupplung 2.2c und Torsionsschwingungsdämpfer 17.2c, wobei jedoch die Anbindung des hydrodynamischen Retarders 11.2c analog zu der in der Figur 2b beschriebenen erfolgt.

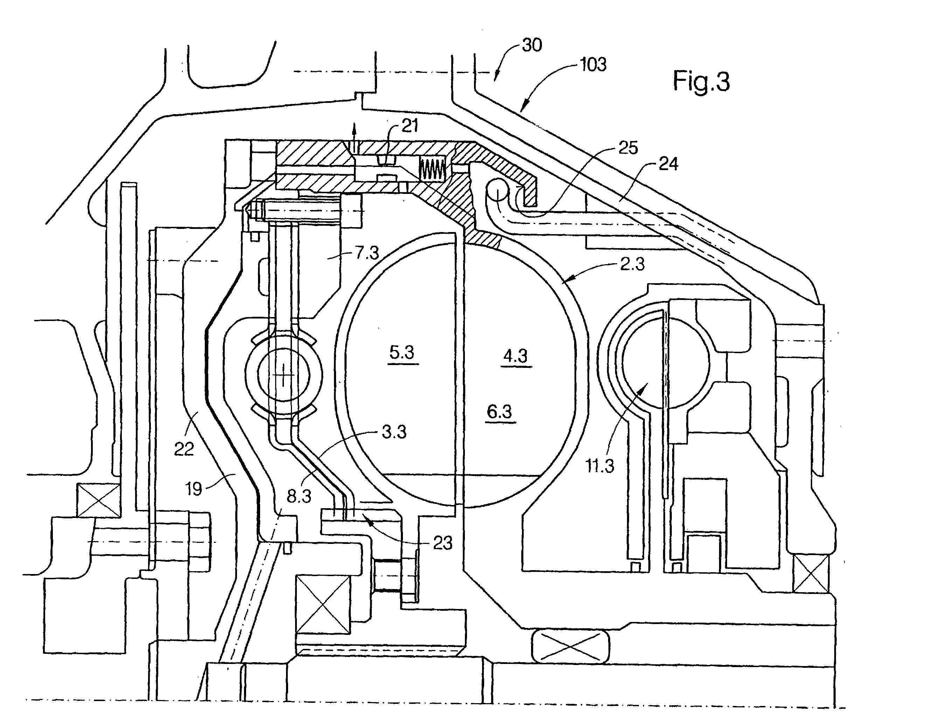

Die Figur 3 verdeutlicht eine mögliche konstruktive Ausführung einer Anfahreinheit 30 mit einem Anfahrelement 1.3, bei welcher erfindungsgemäß zumindest der Schaltvorgang, vorzugsweise auch die Steuer- oder Regelvorgänge der Turbokupplung 2.3 weg- oder druckabhängig, d.h. direkt abhängig von der Betätigung der Überbrückungskupplung 3.3 erfolgt. Der Grundaufbau der Anfahreinheiten entspricht dem in der Figur 1 beschriebenen. Für gleiche Elemente werden daher ebenfalls die gleichen Bezugszeichen verwendet.

Die Eingangsseite der Überbrückungskupplung 3.3, d.h. die Kupplungseingangsscheibe 7.3 ist mit einem Kolbenelement 26 verbunden, welches beim Lösen der Überbrückungskupplung 3.3 in axialer Richtung in Einbaufage des Anfahrelementes betrachtet verschoben wird und aufgrund der Relativbewegung auf ein in einem gemeinsamen Gehäuse 19 befindliches Druckmittel Druck ausübt, wobei der Druck als Stellgröße zur Beaufschlagung der Mittel zur Beeinflussung der Betriebsmittelversorgung der Turbokupplung 2.3 dient. Die Mittel zur Beeinflussung sind hier mit 20 bezeichnet und umfassen wenigstens eine Ventileinrichtung 21, welche in Form eines Wegeventils ausgeführt ist, das als Schaltventil oder Proportionalventil ausgeführt sein kann. Als gemeinsames Gehäuse 19 fungiert hier die Kupplungsglocke, welche mit dem Pumpenrad 4.3 drehfest verbunden ist, vorzugsweise mit diesem eine bauliche Einheit bildet und der ein Deckelelement 22 zugeordnet ist. Des weiteren ersichtlich aus Figur 3 ist die mechanische Kopplung zwischen der Kupplungsausgangsscheibe 8.3 der Überbrückungskupplung 3.3 und dem Abtrieb von der Turbokupplung 2.3, insbesondere dem Turbinenrad 5.3 der Turbokupplung, welche beispielsweise über eine formschlüssige Verbindung 23 realisiert wird. Zusätzlich besteht die Möglichkeit, zur Realisierung der Steuer- und Regelbarkeit der Turbokupplung 2.3 weitere Mittel zur Beeinflussung der Betriebsmittelversorgung vorzusehen, beispielsweise in Form eines Schöpfrohres 24, welches aus dem Arbeitsraum 6.3 in die Kupplungsschale 25 gelangtes Betriebsmittel aus dieser abführt und wieder dem Arbeitskreislauf über einen geschlossenen oder offenen Kreislauf zuführt.

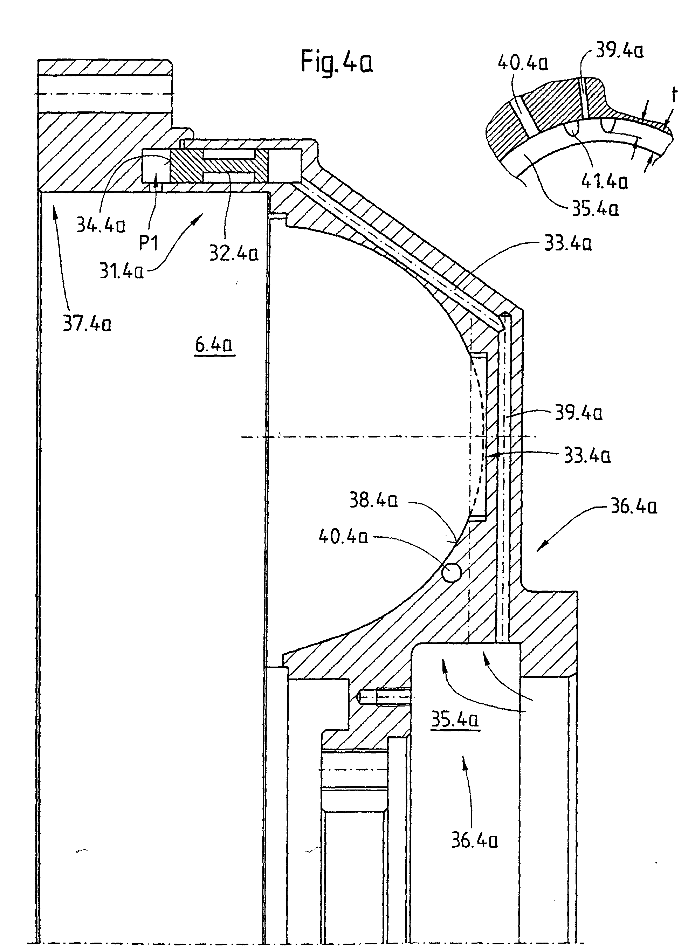

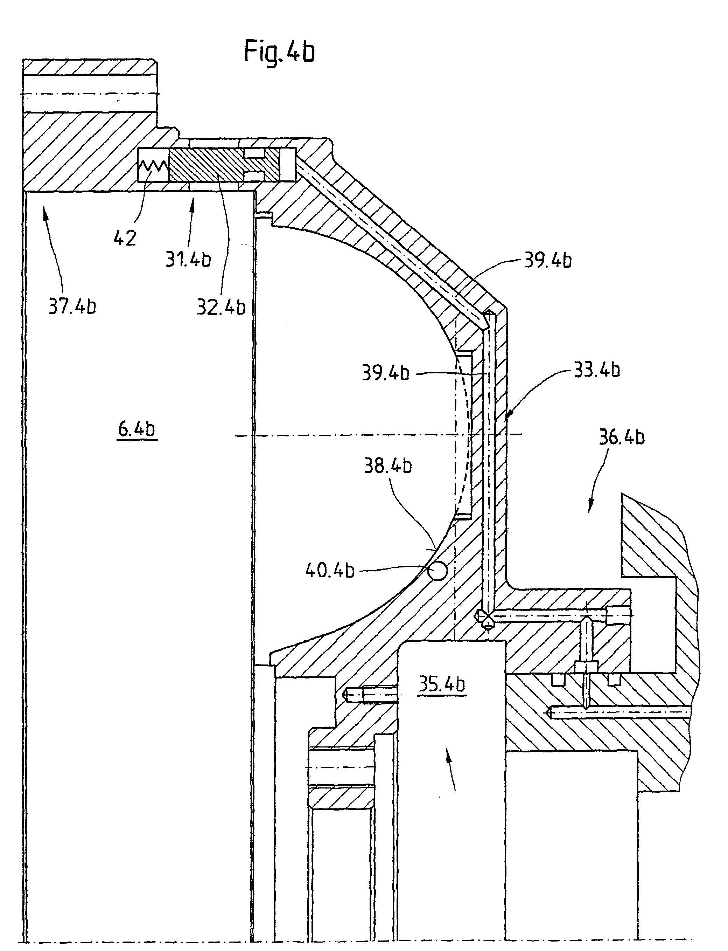

Die Figuren 4a und 4b verdeutlichen jeweils anhand eines Ausschnittes aus einem Anfahrelement 1.4a bzw. 1.4b die Möglichkeit der Entleerbarkeit der torusförmigen Arbeitsräume 6.4a bzw. 6.4b der Turbokupplungen 2.4a bzw. 2.4b mittels Schnellentleerventilen 31.4a bzw. 31.4b. Gemäß Figur 4a ist das Schnellentleerventil 31.4a als Druckwaage ausgebildet, umfassend ein Kolbenelement 32.4a, welches einerseits im Bereich der Kolbenfläche 34.4a durch den Rotationsdruck im torusförmigen Arbeitsraum 6.4a und andererseits durch den Rotationsdruck in einem Bohrungssystem 33.4a im Primärrad, d.h. Pumpenrad 4.4a, zwischen dem Ventilsitz und einer Fangrinne 35.4a auf der Füllkanalseite 36.4a der Turbokupplung 2.4a beaufschlagt wird. Dieser Druck wirkt dabei über eine sogenannte Ventilfüllbohrung 39.4a, welche die Fangrinne 35.4a mit dem Schnellentleerventil 31.4a verbindet und sich vorzugsweise direkt durch die Wand des Pumpenrades 4.4a erstreckt auf das Kolbenelement 32.4a. Die herausgezogene Einzelheit verdeutlicht dabei eine vorteilhafte Ausgestaltung der Anordnung der Ventilfüllbohrung 39.4a und der Füllbohrung 40.4a zum Eintritt 38.4a in den torusförmigen Arbeitsraum 6.4a in Umfangsrichtung, welche durch Trennstege 41.4a, die eine geringere Größe als die Tiefe der gemeinsam genutzten Fangrinne 35.4a aufweisen, getrennt sind. Die Stege ermöglichen eine Veränderung, insbesondere Verkürzung der Schaltzeiten der Schnellentleerventileinrichtung 31.4a, da nicht das gesamte Fangrinnenvolumen wirkt.

Das Kolbenelement 32.4a ist derart ausgebildet und ausgelegt, daß bei geschlossenem Kreislauf, beispielsweise zum Zwecke der Kühlung, zwischen dem Austritt 37.4a und dem Eintritt 38.4a in den torusförmigen Arbeitsraum 6.4a die aus dem Rotationsdruck im Bohrungssystem 33.4a des Pumpenrades 4.4a aufgrund des dort vorhandenen Betriebmittels erzeugte Kolbenkraft gegenüber der aus dem im Arbeitsraum 6.4a vorherrshenden Rotationsdruck gebildeten Gegenkraft überwiegt, wodurch die Entleerstelle, d.h. der Auslaß verschlossen bleibt. Im anderen Fall, d.h. bei gewünschter Entleerung wird die Befüllung gesperrt, insbesondere der Zulauf zum Eintritt 38.4a des torusförmigen Arbeitsraumes 6.4a. Diese Sperrung wird dabei durch die Ansteuerung der Überbrückungskupplung entweder gleichzeitig mit dieser oder zeitlich verzögert zu dieser vorgenommen. Bezüglich der Realisierung der Sperrung bestehen unterschiedliche Möglichkeiten, welche im Ermessen des zuständigen Fachmannes liegen, weshalb im einzelnen an dieser Stelle nicht darauf eingegangen wird. Entscheidend ist lediglich, daß bei Ansteuerung der Überbrückungskupplung, d.h. entweder bereits Signalausgabe in Form einer Stellgröße zur Beaufschlagung der Stellelemente der Überbrückungskupplung oder erst während erfolgender Betätigung Mittel zur Sperrung der Befüllung, insbesondere zur Vermeidung des Eintritts in den torusförmigen Arbeitsraum 6.4a, aktiviert werden. In diesem Fall wird dann der Druck auf der mit der Befüllstelle verbundenen Kolbenseite geringer, da über eine Dauerauslaßbohrung Betriebsmittel aus dem Bohrungssystem 33.4a zum Ventil 31.4a Betriebsmittel in die Kupplungsschale entweicht. Dabei überwiegt die Kraft auf das Kolbenelement 32.4a von der Arbeitsraumseite. Das Schnellentleerventil 31.4a öffnet den zusätzlichen Auslaßquerschnitt.

Bei der Ausführung gemäß Figur 4b ist das Kolbenelement 32.4b des Schnellentleerventiles 31.4b einseitig vorgespannt, d.h. gegenüber der Ausführung gemäß Figur 4a auf der mit dem torusförmigen Arbeitsraum verbundenen Kolbenseite. Auf der anderen Kolbenseite wirkt der Rotationsdruck eines Bohrungssystems 33.4b im Primärrad, d.h. Pumpenrad 4.4b, zwischen dem Ventilsitz und einer Fangrinne 35.4b auf der Füllkanalseite 36.4b der Turbokupplung 2.4b. Dieser Druck wirkt dabei über eine sogenannte Ventilfüllbohrung 39.4b, welche die Fangrinne 35.4b mit dem Schnellentleerventil 31.4b verbindet und sich vorzugsweise direkt durch die Wand des Pumpenrades 4.4b erstreckt auf das Kolbenelement 32.4b. Bezüglich der Anordnung der Ventilfüllbohrung 39.4b und der Füllbohrung 40.4b zum Eintritt 38.4b in den torusförmigen Arbeitsraum 6.4b in Umfangsrichtung kann auf die dargestellte Einzelheit in Figur 4a verwiesen werden. Bei dieser Ausführung wird mittels eines, hier nicht dargestellten Umschaltventiles im geschlossenen Kreislauf zwischen Eintritt 38.4b und Austritt 37.4b aus dem torusförmigen Arbeitsraum 6.4b ein Teilstrom abgezweigt und dem Bohrungssystem zugeführt. Dort baut sich ein Rotationsdruck auf, wodurch über die Ventilfüllbohrung 39.4b eine Kraft auf das Kolbenelement 32.4b augeübt wird, die entgegen der Vorspanneinheit, hier in Form einer Federeinrichtung 42 am anderen Kolbenende wirkt und den Entleerquerschnitt öffnet. Bei Umschaltung des Umschaltventiles auf geschlossenen Kreislauf wird die über das Bohrungssystem beaufschlagte Kolbenfläche des Schnellentleerventiles 31.4b entlastet. Das Bohrungssystem 33.4b entleert über den Dauerauslaß in die Pumpschale und das Schnellentleerventil 31.4b wird mittels Federkraft geschlossen.

Die in den Figuren 1 bis 3 dargestellten Ausführungsmöglichkeiten hinsichtlich der Kopplung der einzelnen Komponenten des Anfahrelementes 1, 1.2, 1.3 bzw. 1.4 miteinander stellen mögliche Ausführungsformen dar, auf die jedoch der Schutzbereich der vorliegenden Anmeldung nicht beschränkt ist. Die Kombination von Überbrückungskupplung, Turbokupplung, Torsionsschwingungsdämpfer und hydrodynamischen Retarder und Integration in einer modularen Baueinheit bietet den Vorteil, mit einer Antriebskomponente eine Vielzahl von unterschiedlichen Aufgaben bei gleichzeitiger geringer Baugröße und hoher Funktionalität mit geringem konstruktiven Aufwand zu realisieren. Vormontiert kann die modulare Baueinheit vorgefertigt und als selbständige Antriebskomponente angeboten und gehandelt werden. Diese ist dann lediglich in bestehende Getriebekonzepte oder Neugetriebekonzepte zu integrieren. Die Anbindung an eine Drehzahl-/Drehmomentenwandlungseinrichtung kann dabei im einfachsten Fall durch Realisierung einer kraftschlüssigen und/oder formschlüssigen Kopplung erfolgen. Die konkrete konstruktive Ausgestaltung der Kopplungsmöglichkeiten der einzelnen Komponenten untereinander und mit dem Antrieb bzw. dem Abtrieb des Anfahrelementes liegen dabei im Ermessen des zuständigen Fachmannes.

### Bezugszeichenliste:

- 1, 1.2a, 1.2b, 1.2c, 1.3, 1.4a, 1.4b: Anfahrelement
- 2, 2.2a, 2.2b, 2.2c, 2.3, 2.4a, 2.4b: Turbokupplung
- 3, 3.2a, 3.2b, 3.2c, 3.3: Überbrückungskupplung
- 4, 4.2a, 4.2b, 4.2c, 4.3, 4.4a, 4.4b: Pumpenrad
- 5, 5.2a, 5.2b, 5.2c, 5.3: Turbinenrad
- 6, 6.2a, 6.2b, 6.2c, 6.3, 6.4a, 6.4b: torusförmiger Arbeitsraum
- 7, 7.2a, 7.2b, 7.2c, 7.3: Kupplungseingangsscheibe
- 8, 8.2a, 8.2b, 8.2c, 8.3: Kupplungsausgangsscheibe
- 9, 9.2a, 9.2b, 9.2c, 9.3: Antrieb
- 10, 10.2a, 10.2b, 10.2c, 10.3: Abtrieb
- 11, 11.2a, 11.2b, 11.2c, 11.3: Bremseinrichtung, hydrodynamischer Retarder
- 12, 12.2a, 12.2b, 12.2c, 12.3: Rotor
- 13, 13.2a, 13.2b, 13.2c, 13.3: Stator
- 14: Verbindung zwischen Antrieb und Pumpenrad der Turbokupplung
- 15: Betriebsmittelversorgungssystem
- 16: Betriebsmittelfördereinrichtung
- 17, 17.2a, 17.2b, 17.2c: Torsionsschwingungsdämpfer
- 18: Mittel zur Kühlung
- 19: Gehäuse
- 20: Mittel zur Beeinflussung der Betriebsmittelversorgung
- 21: Ventileinrichtung
- 22: Deckelelement
- 23: Formschlüssige Verbindung
- 24: Schöpfrohr
- 25: Kupplungsschale
- 26: Kolben
- 27: Steuer-und/oder Regelsystem
- 28: Steuereinrichtung
- 29: Stelleinrichtung Turbokupplung
- 30: Anfahreinheit
- 31.4a, 31.4b: Schnellentleerventil
- 32.4a, 32.4b: Kolbenelement
- 33.4a, 33.4b: Bohrungssystem am Pumpenrad
- 34.4a, 34.4b: Kolbenfläche
- 35.4a, 35.4b: Fangrinne
- 36.4a, 36.4b: Füllkanalseite
- 37.4a, 37.4b: Austritt
- 38.4a, 38.4b: Eintritt
- 39.4a, 39.4b: Ventilfüllbohrung
- 40.4a: Füllbohrung
- 41.4a: Trennstege
- 42: Federeinrichtung

## Patentansprüche

1. Anfahreinheit (30; 30.2, 30,2b, 30.2c; 30.3) für den Einsatz in Schaltgetrieben, insbesondere automatisierten Schaitgetrieben in Antriebssystemen von Fahrzeugen
1.1 mit einem Anfahrelement in Form einer Turbokupplung (2, 2.2a, 2.2b, 2.2c, 2.3), umfassend wenigstens einen torusförmigen Arbeitsraum (6, 6.2a, 6.2b, 6.2c, 6.3, 6.4a, 6.4b);
1.2 mit einer Überbrückungskuppfung (3, 3.2a, 3.2b, 3.2c, 3.3);
1.3 die Überbrückungskupplung (3, 3.2a, 3.2b, 3.2c, 3.3) und die Turbokupptung (2, 2.2a, 2.2b, 2.2c, 2.3) sind parallel geschaltet;
1.4 die Turbokupplung (2, 2.2a, 2.2b, 2.2c, 2.3) ist schaltbar, wobei ein erster Schaftzustand durch die Entleerung und ein zweiter durch die Befüllung des torusförmigen Arbeitsraumes (6, 6.2a, 6.2b, 6.2c, 6.3, 6.4a, 6.4b) beschreibbar ist;
**gekennzeichnet durch** folgende Merkmale:
1.5 die Entleerung des torusförmigen Arbeitsraumes (6, 6.2a, 6.2b, 6.2c, 6.3, 6.4a, 6.4b) wird **durch** die Ansteuerung der Überbrückungskupplung (3, 3.2a, 3.2b, 3.2c, 3.3) ausgelöst;
1.6 mit einer als Druckwaage ausgeführten Schnellentleerventileinrichtung, umfassend ein Kolbenelement mit unterschiedlichen Querschnitten zur Freigabe oder Absperrung von Verbindungsleitungen;
1.7 eine Kolbenfläche des Kolbenelementes wird vom Rotationsdruck des Betriebsmittels im torusförmigen Arbeitsraum beaufschlagt;
1.8 die andere zweite Kolbenfläche wird von einem, in einem in der Wand der hydrodynamischen Kuppplung angeordneten Bohrungssystem zwischen Ventilsitz und Fangrinne vorherrschenden Druck des Betriebsmittels beaufschlagt, wobei die Kolbenflächen derart ausgelegt sind, daß bei Überschreitung der **durch** den Druck im Bohrungssystem auf die Kolbenfläche wirkenden Kraft **durch** die aus dem Rotationsdruck im torusförmigen Arbeitsraum auf das Kolbenelement resultierenden Kraft ein zusätzlicher Auslaßquerschnitt für das Betriebsmittel aus dem torusförmigen Arbeitsraum geöffnet wird.

2. Anfahreinheit (30; 30.2, 30.2b, 30.2c; 30.3) für den Einsatz in Schaltgetrieben, insbesondere automatisierten Schaltgetrieben in Antriebssystemen von Fahrzeugen
2.1 mit einem Anfahrelement in Form einer Turbokupplung (2, 2.2a, 2.2b, 2.2c, 2.3), umfassend wenigstens einen torusförmigen Arbeitsraum (6, 6.2a, 6.2b, 6.2c, 6.3, 6.4a, 6.4b);
2.2 mit einer Überbrückungskupplung (3, 3.2a, 3.2b, 3.2c, 3.3);
2.3 die Überbrückungskupplung (3, 3.2a, 3.2b, 3.2c, 3.3) und die Turbokupplung (2, 2.2a, 2.2b, 2.2c, 2.3) sind parallel geschaltet;
2.4 die Turbokupplung (2, 2.2a, 2.2b, 2.2c, 2.3) ist schaltbar, wobei ein erster Schaltzustand durch die Entleerung und ein zweiter durch die Befüllung des torusförmigen Arbeitsraumes (6, 6.2a, 6.2b, 6.2c, 6.3, 6.4a, 6.4b) beschreibbar ist;
**gekennzeichnet durch** folgende Merkmale:
2.5 die Entleerung des torusförmigen Arbeitsraumes (6, 6.2a, 6.2b, 6.2c, 6.3, 6.4a, 6.4b) wird **durch** die Ansteuerung der Überbrückungskupplung (3, 3.2a, 3.2b, 3.2c, 3.3) ausgelöst;
2.6 mit einer als Druckwaage ausgeführten Schnellentleerventileinrichtung, umfassend ein Kolbenelement mit unterschiedlichen Querschnitten zur Freigabe oder Absperrung von Verbindungsleitungen;
2.7 an einer ersten Kolbenfläche des Kolbenelementes wirkt eine, von einer Vorspanneinrichtung aufgebrachten Kraft;
2.8 die andere zweite Kolbenfläche wird von einem, in einem in der Wand der hydrodynamischen Kupplung angeordneten Bohrungssystem zwischen Ventilsitz und Fangrinne vorherrschenden Druck des Betriebsmittels beaufschlagt, wobei die Kolbenflächen derart ausgelegt sind, daß bei Überschreitung der **durch** die Vorspanneinrichtung aufgebrachten Kraft **durch** die **durch** den Druck im Bohrungssystem auf die Kolbenfläche wirkenden Kraft ein zusätzlicher Auslaßquerschnitt für das Betriebsmittel aus dem torusförmigen Arbeitsraum geöffnet wird.

3. Anfahreinheit (30; 30.2, 30.2b, 30.2c; 30.3) nach Anspruch 2, **dadurch gekennzeichent, daß** die Vorspanneinrichtung wenigstens eine Federeinheit umfaßt.

4. Anfahreinheit (30; 30.2, 30.2b, 30.2c; 30.3) nach einem der Ansprüche 1 bis 3, **dadurch gekennzeichnet, daß** die Befüllung des torusförmigen Arbeitsraumes (6, 6.2a, 6.2b, 6.2c, 6.3, 6.4a, 6.4b) durch die Ansteuerung der Überbrückungskupplung (3, 3.2a, 3.2b, 3.2c, 3.3) ausgelöst wird.

5. Anfahreinheit (30; 30.2, 30.2b, 30.2c; 30.3) nach einem der Ansprüche 1 bis 4, **dadurch gekennzeichnet, daß** die Turbokupplung (2, 2.2a, 2.2b, 2.2c) steuer- und/oder regelbar ist.

6. Anfahreinheit (30; 30.2, 30.2b, 30.2c; 30.3) nach einem der Ansprüche 1 bis 5, **dadurch gekennzeichnet, daß** die Ansteuerung der Überbrückungskupplung (3, 3.2a, 3.2b, 3.2c, 3.3) durch Einleitung der Befüllung oder Entleerung des torusförmigen Arbeitsraumes (6, 6.2a, 6.2b, 6.2c, 6.3, 6.4a, 6.4b) der Turbokupplung (3, 3.2a, 3.2b, 3.2c, 3.3, 3.4a, 3.4b) gleichzeitig erfolgt.

7. Anfahreinheit (30; 30.2, 30.2b, 30.2c; 30.3) nach einem der Ansprüche 1 bis 6, **dadurch gekennzeichnet, daß** die Ansteuerung der Überbrückungskupplung (3, 3.2a, 3.2b, 3,2c, 3.3) durch Einleitung der Befüllung oder Entleerung des torusförmigen Arbeitsraumes (6, 6.2a, 6.2b, 6.2c, 6.3, 6.4a, 6.4b) der Turbokupplung (3, 3.2a, 3.2b, 3.2c, 3.3, 3.4a, 3.4b) zeitlich versetzt zueinander erfolgen.

8. Anfahreinheit (30; 30.2, 30.2b, 30.2c; 30.3) nach einem der Ansprüche 1 bis 7, **dadurch gekennzeichnet, daß** der Schalt- oder Steuer- und/oder Regelvorgang der Turbokupplung (2, 2.2a, 2.2b, 2.2c, 2.3) durch die Ansteuerung der Überbrückungskupplung (3, 3.2a, 3.2b, 3.2c, 3.3) in Abhängigkeit der Relativbewegung einzelner Elemente der Überbrückungskupplung (3, 3.2a, 3.2b, 3.2c, 3.3) ausgelöst wird.

9. Anfahreinheit (30; 30.2, 30.2b, 30.2c; 30.3) nach einem der Ansprüche 1 bis 8, **dadurch gekennzeichnet, daß** der Schaft- oder Steuer- und/oder Regelvorgang der Turbokupplung (2, 2.2a, 2.2b, 2.2c, 2.3) durch die Ansteuerung der Überbrückungskupplung (3, 3.2a, 3.2b, 3.2c, 3.3) in Abhängigkeit des Vorliegens eines elektrischen Signales zur Betätigung der Überbrückungskupplung (3, 3.2a, 3.2b, 3.2c, 3.3) ausgelöst wird.

10. Anfahreinheit (30; 30.2, 30.2b, 30.2c; 30.3) nach einem der Ansprüche 1 bis 8, **dadurch gekennzeichnet, daß** der Steuerund/oder Regelvorgang der Turbokupplung (2, 2.2a, 2.2b, 2.2c, 2.3) durch die Ansteuerung der Überbrückungskupplung (3, 3.2a, 3.2b, 3.2c, 3.3) in Abhängigkeit eines Druckes ausgelöst wird.

11. Anfahreinheit (30; 30.2, 30.2b, 30.2c; 30.3) nach einem der Ansprüche 1 bis 10, **dadurch gekennzeichnet, daß** die Kopplung der Mittel zur Ansteuerung der Überbrückungskupplung und der Mittel zur Beeinflussung des Füllungsgrades der Turbokupplung mechanische Übertragungsglieder umfassen.

12. Anfahreinheit (30; 30.2, 30.2b, 30.2c; 30.3) nach einem der Ansprüche 1 bis 11, **dadurch gekennzeichnet, daß** die Kopplung der Mittel zur Ansteuerung der Überbrückungskupplung und der Mittel zur Beeinflussung des Füllungsgrades der Turbokupplung hydraulische Übertragungsglieder umfassen.

13. Anfahreinheit (30; 30.2, 30.2b, 30.2c; 30.3) nach einem der Ansprüche 1 bis 12 **dadurch gekennzeichnet, daß** die Kopplung der Mittel zur Ansteuerung der Überbrückungskupplung und der Mittel zur Beeinflussung des Füllungsgrades der Turbokupplung pneumatische Übertragungsglleder umfassen.

14. Anfahreinheit (30; 30.2, 30.2b, 30.2c; 30.3) nach einem der Ansprüche 1 bis 13, **dadurch gekennzeichnet, daß** die Kopplung der Mittel zur Ansteuerung der Überbrückungskupplung und der Mittel zur Beeinflussung des Füllungsgrades der Turbokupplung elektronische Übertragungsglieder umfassen.

15. Anfahreinheit (30; 30.2, 30.2b, 30.2c; 30.3) nach Anspruch 14, **dadurch gekennzeichnet, daß** die Befüllung oder Entleerung der Turbokupplung (2, 2.2a, 2.2b, 2.2c, 2.3) durch den Aufbau eines statischen Differenzdruckes erfolgt, weicher von der Druckluftanlage des Fahrzeuges geliefert wird.

16. Anfahreinheit (30; 30.2, 30.2b, 30.2c; 30.3) nach Anspruch 14, **dadurch gekennzeichnet, daß** die Betriebsmittelversorgungsquelle einen Tank oder Speicher umfaßt und die Füllung der Turbokupplung (2, 2.2a, 2.2b, 2.2c, 2.3) durch den Aufbau eines statischen Differenzdruckes erfolgt, welcher durch die Anordnung der Betriebsmittelversorgungsquelle bestimmbar ist.

## Claims

1. A starting unit (30; 30.2, 30.2b, 30.2c; 30.3) for use in change-speed gears, especially automated change-speed gears in driving systems of vehicles,
1.1 with a starting element in the form of a turbo coupling (2, 2.2a, 2.2b, 2.2c, 2.3) comprising at least one toroidal working chamber (6, 6.2a, 6.2b, 6.2c, 6.3, 6.4a, 6.4b);
1.2 with a lock-up clutch (3, 3.2a, 3.2b, 3.2c, 3.3);
1.3 with the lock-up clutch (3, 3.2a, 3.2b, 3.2c, 3.3) and the turbo coupling (2, 2.2a, 2.2b, 2.2c, 2.3) being switched in parallel;
1.4 with the turbo coupling (2, 2.2a, 2.2b, 2.2c, 2.3) being switchable, with the first switching state being describable by the emptying and the second one by the filling of the toroidal working chamber (6, 6.2a, 6.2b, 6.2c, 6.3, 6.4a, 6.4b);
**characterized by** the following features:
1.5 the emptying of the toroidal working chamber (6, 6.2a, 6.2b, 6.2c, 6.3, 6.4a, 6.4b) is initiated by the triggering of the lock-up clutch (3, 3.2a, 3.2b, 3.2c, 3.3);
1.6 with a quick-emptying valve device arranged as a pressure balance, comprising a piston element with different cross sections for releasing or blocking connecting lines;
1.7 a piston surface of the piston element is charged by the rotational pressure of the operating medium in the toroidal working chamber;
1.8 the other, second piston surface is charged by a pressure of the operating medium prevailing in a bore system disposed in the wall of the hydrodynamic coupling between valve seat and collecting trough, with the piston surfaces being configured in such a way that on exceeding the force acting by the pressure in the bore system on the piston surface as a result of the force resulting from the rotational pressure in the toroidal working chamber on the piston element an additional outlet cross section for the operating medium from the toroidal working chamber is opened.

2. A starting unit (30; 30.2, 30.2b, 30.2c; 30.3) for use in change-speed gears, especially automated change-speed gears in driving systems of vehicles,
2.1 with a starting element in the form of a turbo coupling (2, 2.2a, 2.2b, 2.2c, 2.3) comprising at least one toroidal working chamber (6, 6.2a, 6.2b, 6.2c, 6.3, 6.4a, 6.4b);
2.2 with a lock-up clutch (3, 3.2a, 3.2b, 3.2c, 3.3);
2.3 with the lock-up clutch (3, 3.2a, 3.2b, 3.2c, 3.3) and the turbo coupling (2, 2.2a, 2.2b, 2.2c, 2.3) being switched in parallel;
2.4 with the turbo coupling (2, 2.2a, 2.2b, 2.2c, 2.3) being switchable, with the first switching state being describable by the emptying and the second one by the filling of the toroidal working chamber (6, 6.2a, 6.2b, 6.2c, 6.3, 6.4a, 6.4b);
**characterized by** the following features:
2.5 the emptying of the toroidal working chamber (6, 6.2a, 6.2b, 6.2c, 6.3, 6.4a, 6.4b) is initiated by the triggering of the lock-up clutch (3, 3.2a, 3.2b, 3.2c, 3.3);
2.6 with a quick-emptying valve device arranged as a pressure balance, comprising a piston element with different cross sections for releasing or blocking connecting lines;
2.7 a force applied by pretensioning device acts on a first piston surface of the piston element;
2.8 the other, second piston surface is charged by a pressure of the operating medium prevailing in a bore system disposed in the wall of the hydrodynamic coupling between valve seat and collecting trough, with the piston surfaces being configured in such a way that on exceeding the force acting by the pressure in the bore system on the piston surface as a result of the force resulting from the rotational pressure in the toroidal working chamber on the piston element an additional outlet cross section for the operating medium from the toroidal working chamber is opened.

3. A starting unit (30; 30.2, 30.2b, 30.2c; 30.3) as claimed in claim 2, **characterized in that** the pretensioning device comprises at least one spring unit.

4. A starting unit (30; 30.2, 30.2b, 30.2c; 30.3) as claimed in one of the claims 1 to 3, **characterized in that** the filling of the toroidal working chamber (6, 6.2a, 6.2b, 6.2c, 6.3, 6.4a, 6.4b) is initiated by the triggering of the lock-up clutch (3, 3.2a, 3.2b, 3.2c, 3.3).

5. A starting unit (30; 30.2, 30.2b, 30.2c; 30.3) as claimed in one of the claims 1 to 4, **characterized in that** the turbo coupling (2, 2.2a, 2.2b, 2.2c) can be controlled and/or regulated.

6. A starting unit (30; 30.2, 30.2b, 30.2c; 30.3) as claimed in one of the claims 1 to 5, **characterized in that** the triggering of the lock-up clutch (3, 3.2a, 3.2b, 3.2c, 3.3) occurs simultaneously by initiating the filling or emptying of the toroidal working chamber (6, 6.2a, 6.2b, 6.2c, 6.3, 6.4a, 6.4b) of the turbo coupling.

7. A starting unit (30; 30.2, 30.2b, 30.2c; 30.3) as claimed in one of the claims 1 to 6, **characterized in that** the triggering of the lock-up clutch (3, 3.2a, 3.2b, 3.2c, 3.3) occurs in a temporally mutually offset way by initiating the filling or emptying of the toroidal working chamber (6, 6.2a, 6.2b, 6.2c, 6.3, 6.4a, 6.4b) of the turbo coupling.

8. A starting unit (30; 30.2, 30.2b, 30.2c; 30.3) as claimed in one of the claims 1 to 7, **characterized in that** the switching or controlling and/or regulating process of the turbo coupling (2, 2.2a, 2.2b, 2.2c) is initiated by triggering the lock-up clutch (3, 3.2a, 3.2b, 3.2c, 3.3) depending on the relative movement of individual elements of the lock-up clutch (3, 3.2a, 3.2b, 3.2c, 3.3).

9. A starting unit (30; 30.2, 30.2b, 30.2c; 30.3) as claimed in one of the claims 1 to 8, **characterized in that** the switching or controlling and/or regulating process of the turbo coupling (2, 2.2a, 2.2b, 2.2c, 2.3) is initiated by triggering the lock-up clutch (3, 3.2a, 3.2b, 3.2c, 3.3) depending on the presence of an electric signal for actuating the lock-up clutch (3, 3.2a, 3.2b, 3.2c, 3.3).

10. A starting unit (30; 30.2, 30.2b, 30.2c; 30.3) as claimed in one of the claims 1 to 8, **characterized in that** the switching or controlling and/or regulating process of the turbo coupling (2, 2.2a, 2.2b, 2.2c, 2.3) is initiated by triggering the lock-up clutch (3, 3.2a, 3.2b, 3.2c, 3.3) depending on a pressure.

11. A starting unit (30; 30.2, 30.2b, 30.2c; 30.3) as claimed in one of the claims 1 to 10, **characterized in that** the coupling of the means for triggering the lock-up clutch and the means for influencing the degree of filling of the turbo coupling comprise mechanical transmission members.

12. A starting unit (30; 30.2, 30.2b, 30.2c; 30.3) as claimed in one of the claims 1 to 11, **characterized in that** the coupling of the means for triggering the lock-up clutch and the means for influencing the degree of filling of the turbo coupling comprise hydraulic transmission members.

13. A starting unit (30; 30.2, 30.2b, 30.2c; 30.3) as claimed in one of the claims 1 to 12, **characterized in that** the coupling of the means for triggering the lock-up clutch and the means for influencing the degree of filling of the turbo coupling comprise pneumatic transmission members.

14. A starting unit (30; 30.2, 30.2b, 30.2c; 30.3) as claimed in one of the claims 1 to 13, **characterized in that** the coupling of the means for triggering the lock-up clutch and the means for influencing the degree of filling of the turbo coupling comprise electronic transmission members.

15. A starting unit (30; 30.2, 30.2b, 30.2c; 30.3) as claimed in claim 14, **characterized in that** the filling or emptying of the turbo coupling (2, 2.2a, 2.2b, 2.2c, 2.3) is performed by building up a static differential pressure which is supplied by the vehicle's compressed-air system.

16. A starting unit (30; 30.2, 30.2b, 30.2c; 30.3) as claimed in claim 14, **characterized in that** the supply source for the operating medium comprises a tank or reservoir and the, filling of the turbo coupling (2, 2.2a, 2.2b, 2.2c, 2.3) is performed by building up a static differential pressure which can be determined by the arrangement of the supply source for the operating medium.

## Revendications

1. Unité de démarrage (30 ; 30.2, 30.2b, 30.2c ; 30.3) destinée à être implantée dans des boîtes de vitesses, en particulier des boîtes automatiques dans des systèmes d'entraînement de véhicules automobiles
1.1 avec un élément de démarrage sous forme d'un turbo-accouplement (2, 2.2a, 2.2b, 2.2c, 2.3) comportant au moins un espace de travail torique (6, 6.2a, 6.2b, 6.2c, 6.3, 6.4a, 6.4b) ;
1.2 avec un accouplement de pontage (3, 3.2a, 3.2b, 3.2c, 3.3) ;
1.3 l'accouplement de pontage (3, 3.2a, 3.2b, 3.2c, 3.3) et le turbo-accouplement (2, 2.2a, 2.2b, 2.2c, 2.3) sont montés en parallèle ;
1.4 le turbo-accouplement (2, 2.2a, 2.2b, 2.2c, 2.3) est commutable, un premier état pouvant être décrit par l'évacuation, et un deuxième par le remplissage, de l'espace de travail torique (6, 6.2a, 6.2b, 6.2c, 6.3, 6.4a, 6.4b) ;
**caractérisée par** les particularités suivantes :
1.5 l'évacuation de l'espace de travail torique (6, 6.2a, 6.2b, 6.2c, 6.3, 6.4a, 6.4b) est déclenchée par la commande d'activation de l'accouplement de pontage (3, 3.2a, 3.2b, 3.2c, 3.3) ;
1.6 avec un système de soupape d'évacuation rapide conçu en tant que balance manométrique, comportant un élément piston de sections différentes pour la libération ou le blocage de conduits de raccordement ;
1.7 une surface de l'élément piston est actionnée par la pression de rotation du fluide de travail dans l'espace de travail torique ;
1.8 l'autre, deuxième surface de piston est actionnée par une pression du fluide de travail régnant entre siège de soupape et collecteur, dans un système d'alésages ménagé dans la paroi de l'accouplement hydrodynamique, les surfaces de piston étant disposées de sorte qu'en cas de dépassement de la force agissant sur la surface du piston sous l'effet de la pression dans le système d'alésages, une section supplémentaire de décharge pour le fluide de travail est ouverte dans l'espace de travail torique par la poussée exercée sur l'élément piston sous l'effet de la pression de rotation dans l'espace de travail torique.

2. Unité de démarrage (30 ; 30.2, 30.2b, 30.2c ; 30.3) destinée à être implantée dans des boîtes de vitesses, en particulier des boîtes automatiques dans des systèmes d'entraînement de véhicules automobiles
2.1 avec un élément de démarrage sous forme d'un turbo-accouplement (2, 2.2a, 2.2b, 2.2c, 2.3) comportant au moins un espace de travail torique (6, 6.2a, 6.2b, 6.2c, 6.3, 6.4a, 6.4b) ;
2.2 avec un accouplement de pontage (3, 3.2a, 3.2b, 3.2c, 3.3) ;
2.3 l'accouplement de pontage (3, 3.2a, 3.2b, 3.2c, 3.3) et le turbo-accouplement (2, 2.2a, 2.2b, 2.2c, 2.3) sont montés en parallèle ;
2.4 le turbo-accouplement (2, 2.2a, 2.2b, 2.2c, 2.3) est commutable, un premier état pouvant être décrit par l'évacuation, et un deuxième par le remplissage, de l'espace de travail torique (6, 6.2a, 6.2b, 6.2c, 6.3, 6.4a, 6.4b) ;
**caractérisée par** les particularités suivantes :
2.5 l'évacuation de l'espace de travail torique (6, 6.2a, 6.2b, 6.2c, 6.3, 6.4a, 6.4b) est déclenchée par la commande de l'accouplement de pontage (3, 3.2a, 3.2b, 3.2c, 3.3) ;
2.6 avec un système de soupape d'évacuation rapide conçu en tant que balance manométrique, comportant un élément piston de sections différentes pour la libération ou le blocage de conduits de raccordement ;
2.7 une force appliquée par un mécanisme de précontrainte agit sur une première surface de l'élément piston;
2.8 une deuxième surface du piston est exposée à une pression du fluide de travail régnant entre siège de soupape et collecteur, dans un système d'alésages ménagé dans la paroi de l'accouplement hydrodynamique, les surfaces de piston étant disposées de sorte qu'en cas de dépassement de la force appliquée par le mécanisme de précontrainte sur le piston par la force de la pression dans le système d'alésages, une section supplémentaire de décharge pour le fluide de travail est ouverte dans l'espace de travail torique par la poussée exercée sous l'effet de la pression de rotation dans l'espace de travail torique.

3. Unité de démarrage (30 ; 30.2, 30.2b, 30.2c ; 30.3) selon la revendication 2, **caractérisée en ce que** le mécanisme de précontrainte comprend au moins une unité à ressort.

4. Unité de démarrage (30 ; 30.2, 30.2b, 30.2c ; 30.3) selon l'une des revendications 1 à 3, **caractérisée en ce que** le remplissage de l'espace de travail torique (6, 6.2a, 6.2b, 6.2c, 6.3, 6.4a, 6.4b) est déclenché par la commande de l'accouplement de pontage (3, 3.2a, 3.2b, 3.2c, 3.3).

5. Unité de démarrage (30 ; 30.2, 30.2b, 30.2c ; 30.3) selon l'une des revendications 1 à 4, **caractérisée en ce que** le turbo-accouplement (2, 2.2a, 2.2b,2.2c, 2.3) est commutable et/ou réglable.

6. Unité de démarrage (30 ; 30.2, 30.2b, 30.2c ; 30.3) selon l'une des revendications 1 à 5, **caractérisée en ce que** la commande de l'accouplement de pontage (3, 3.2a, 3.2b, 3.2c, 3.3) se traduit par le déclenchement simultané du remplissage ou de l'évacuation de l'espace de travail torique (6, 6.2a, 6.2b, 6.2c, 6.3, 6.4a, 6.4b) du turbo-accouplement (3, 3.2a, 3.2b, 3.2c, 3.3, 3.4a, 3.4b).

7. Unité de démarrage (30 ; 30.2, 30.2b, 30.2e ; 30.3) selon l'une des revendications 1 à 6, **caractérisée en ce que** la commande de l'accouplement de pontage (3, 3.2a, 3.2b, 3.2c, 3.3) se traduit par le déclenchement décalé dans le temps du remplissage ou de l'évacuation de l'espace de travail torique (6, 6.2a, 6.2b, 6.2c, 6.3, 6.4a, 6.4b) du turbo-accouplement (3, 3.2a, 3.2b, 3.2c, 3.3, 3.4a, 3.4b).

8. Unité de démarrage (30 ; 30.2, 30.2b, 30.2c ; 30.3) selon l'une des revendications 1 à 7, **caractérisée en ce que** le processus d'enclenchement - ou de commande et/ou de réglage du turbo-accouplement (2, 2.2a, 2.2b, 2.2c, 2.3) est déclenché par la commande de l'accouplement de pontage (3, 3.2a, 3.2b, 3.2c, 3.3) en fonction du mouvement relatif d'éléments individuels de l'accouplement de pontage (3, 3.2a, 3.2b, 3.2c, 3.3).

9. Unité de démarrage (30 ; 30.2, 30.2b, 30.2c ; 30.3) selon l'une des revendications 1 à 8, **caractérisée en ce que** le processus d'enclenchement - ou de commande et/ou de réglage du turbo-accouplement (2, 2.2a, 2.2b, 2.2c, 2.3) est déclenché par la commande de l'accouplement de pontage (3, 3.2a, 3.2b, 3.2c, 3.3) en fonction de la présence d'un signal électrique d'actionnement de l'accouplement de pontage (3, 3.2a, 3.2b, 3.2c, 3.3).

10. Unité de démarrage (30 ; 30.2, 30.2b, 30.2c ; 30.3) selon l'une des revendications 1 à 8, **caractérisée en ce que** le processus de commande et/ou de réglage du turbo-accouplement (2, 2.2a, 2.2b, 2.2c, 2.3) est déclenché par la commande de l'accouplement de pontage (3, 3.2a, 3.2b, 3.2c, 3.3) en fonction d'une pression.

11. Unité de démarrage (30 ; 30.2, 30.2b, 30.2c ; 30.3) selon l'une des revendications 1 à 10, **caractérisée en ce que** le couplage des moyens destinés à commander l'actionnement de l'accouplement de pontage et des moyens destinés à influer sur le degré de remplissage du turbo-accouplement comprennent des organes de transmission mécaniques.

12. Unité de démarrage (30 ; 30.2, 30.2b, 30.2c ; 30.3) selon l'une des revendications 1 à 11, **caractérisée en ce que** le couplage des moyens destinés à commander la mise en oeuvre de l'accouplement de pontage et des moyens destinés à influer sur le degré de remplissage du turbo-accouplement comprennent des organes de transmission hydrauliques.

13. Unité de démarrage (30 ; 30.2, 30.2b, 30.2c ; 30.3) selon l'une des revendications 1 à 12, **caractérisée en ce que** le couplage des moyens destinés à commander l'activation de l'accouplement de pontage et des moyens destinés à influer sur le degré de remplissage du turbo-accouplement comprennent des organes de transmission pneumatiques.

14. Unité de démarrage (30 ; 30.2, 30.2b, 30.2c ; 30.3) selon l'une des revendications 1 à 13, **caractérisée en ce que** le couplage des moyens destinés à commander les moyens d'activation de l'accouplement de pontage et des moyens destinés à influer sur le degré de remplissage du turbo-accouplement comprennent des organes de transmission électroniques.

15. Unité de démarrage (30 ; 30.2, 30.2b, 30.2c ; 30.3) selon la revendication 14, **caractérisée en ce que** le remplissage ou l'évacuation du turbo-accouplement (2, 2.2a, 2.2b, 2.2c, 2.3) est réalisé par l'établissement d'une pression différentielle statique qui est fournie par l'installation à air comprimé du véhicule.

16. Unité de démarrage (30 ; 30.2, 30.2b, 30.2c ; 30.3) selon la revendication 14, **caractérisée en ce que** la source d'approvisionnement en fluide de travail comprend un réservoir ou unité de stockage et le remplissage du turbo-accouplement (2, 2.2a, 2.2b, 2.2c, 2.3) est réalisé par l'établissement d'une pression différentielle statique qui peut être déterminée par l'agencement de la source d'approvisionnement en fluide de travail.
